# EUROPEAN PATENT APPLICATION

(11) **EP 4 804 491 A1**
(43) Date of publication of application: **09.09.2026**
(21) Application number: 24908146.4
(22) Date of filing: 20.12.2024
(51) Int. Cl.: H04L 65/40, H04L 65/1104, H04N 7/14, H04L 65/1108, H04L 65/1016, H04W 4/16

(54) **METHOD AND DEVICE FOR MEDIA COMMUNICATION IN COMMUNICATION SYSTEM**

(30) Priority: 20.12.2023 KR 20230186787
(71) Applicant: Samsung Electronics Co., Ltd., Suwon-si, Gyeonggi-do 16677 (KR)
(72) Inventor: RHYU, Sungryeul, Suwon-si, Gyeonggi-do 16677 (KR); KIM, Dongyeon, Suwon-si, Gyeonggi-do 16677 (KR); BAE, Jaehyeon, Suwon-si, Gyeonggi-do 16677 (KR)
(74) Representative: Gulde & Partner
(86) International application number: PCT/KR2024/020799
(87) International publication number: WO 2025/135864

(57) **Abstract**

The present disclosure relates to a 5G or 6G communication system for supporting higher data transmission rates. A method performed by a device included in a core network in a communication system according to an embodiment of the present disclosure may comprise the steps of: receiving, from a first terminal, a first message for an avatar call between the first terminal and a second terminal, wherein the first message includes a first avatar media list available on the first terminal in relation to the avatar call; updating the first message to further include a second avatar media list which can be provided by the core network in relation to the avatar call; transmitting the updated first message to the second terminal; receiving a second message including one or more avatar media from the second terminal, wherein each of the avatar media is included in the first avatar media list or the second avatar media list; and setting the avatar call on the basis of the one or more avatar media.

## Description

### [Technical Field]

The present disclosure relates generally to a wireless communication system, and more particularly, to a method and device for media communication in a wireless communication system.

### [Background Art]

5G mobile communication technology defines a wide frequency band to enable a fast transmission speed and new services, and can be implemented not only in sub 6GHz frequency bands, such as 3.5 gigahertz (3.5GHz), but also in ultra-high frequency band ('above 6GHz'), also known as millimeter wave (mmWave), such as 28GHz and 39GHz. In addition, 6G mobile communication technology, which is called a system beyond 5G communication, is being considered to be implemented in a terahertz band (e.g., from 95GHz to 3 terahertz (3THz) band) to achieve a transmission speed 50 times faster and an ultra-low latency reduced to one-tenth, compared to the 5G mobile communication technology.

The goal in the early stage of the 5G mobile communication technology is to support services and meet performance requirements for enhanced mobile broadband (eMBB), ultra-reliable low-latency communications (URLLC), and massive machine-type communications (mMTC). To achieve the goal, standardization is underway for beamforming and massive MIMO to mitigate path loss of radio waves and increase a propagation range in an ultra-high frequency band, support for various numerologies (such as an operation of multiple subcarrier spacings) and dynamic operation of slot formats for efficient utilization of ultra-high frequency resources, initial access technologies to support multi-beam transmission and broadband, definition and operation of a bandwidth part (BWP), new channel coding methods such as a low density parity check (LDPC) code for large-capacity data transmission and a polar code for high reliable transmission of control information, L2 pre-processing, network slicing to provide dedicated networks specialized to specific services, etc.

Currently, discussions are underway for improvement and performance enhancement of the initial 5G mobile communication technology in consideration of services that the 5G mobile communication technology was intended to support. Physical layer standardization is underway for technologies such as vehicle-to-everything (V2X), which assists in driving determination s of autonomous vehicles and enhances user convenience based on their own location and status information transmitted by vehicles, new radio unlicensed (NR-U), which aims for system operation meeting various regulatory requirements in unlicensed bands, NR UE power saving, a non-terrestrial network (NTN), which is direct UE-satellite communication to secure coverage in areas where communication with terrestrial networks is impossible, and positioning.

In addition, standardization of wireless interface architecture/protocol fields is also underway for technologies such as intelligent factories (industrial Internet of Things, IIoT) to support new services through integration and convergence with other industries, integrated access and backhaul (IAB) that provides nodes to extend network service area by integrating and supporting a wireless backhaul link and an access link, mobility enhancement technology including conditional handover and dual active protocol stack (DAPS) handover, and two-step random access (2-step RACH for NR) that simplifies a random access procedure, and standardization of system architecture/service fields is also underway for 5G baseline architecture (e.g., service based architecture, service based interface) for combining network functions virtualization (NFV) and software-defined networking (SDN) technologies, and mobile edge computing (MEC) that receives services based on a location of a UE, etc.

When such 5G mobile communication systems are commercialized, connected devices, experiencing explosive growth, will be linked to communication networks. Therefore, it is expected that the enhancement of the functions and performance of 5G mobile communication systems and the integrated operation of connected devices will be required. To this end, new research is scheduled to be performed on eXtended reality (XR) to efficiently support augmented reality (AR), virtual reality (VR), mixed reality (MR), etc., enhancing 5G performance and reducing complexity by using artificial intelligence (AI) and machine learning (ML), supporting AI services, supporting metaverse services, drone communications, etc.

In addition, the advancement of the 5G mobile communication systems may provide the foundation for the development of not only 6G mobile communication technologies, including a new waveform to ensure coverage in a terahertz band, multi-antenna transmission technologies such as full-dimensional multiple-input multiple-output (FD-MIMO), array antennas, and large-scale antennas, metamaterial-based lenses and antennas to enhance coverage of a terahertz band signal, high-dimensional spatial multiplexing technology using orbital angular momentum (OAM), and reconfigurable intelligent surface (RIS) technology, but also for 6G mobile communication technologies, including full-duplex technology to enhance frequency efficiency and improve system networks, AI-based communication technologies that utilize satellites and artificial intelligence (AI) from the design stage and incorporate end-to-end AI support functions to achieve system optimization, and next-generation distributed computing technologies that utilize ultra-high-performance communication and computing resources to realize highly complex services beyond the limitations of UE computing capabilities, etc.

### [Disclosure of Invention]

### [Technical Problem]

Various embodiments of the present disclosure may provide a method and device for media communication in a wireless communication system.

Various embodiments of the present disclosure may provide a method for transmitting and receiving avatar call/communication data in a stepwise manner. For example, various embodiments of the present disclosure may relate to video/audio call and data transmission using Internet protocol (IP) multimedia subsystem (IMS) and web real-time communication (WebRTC).

The technical problems to be achieved in various embodiments of the present disclosure are not limited to those mentioned above, and other technical problems not mentioned may be considered by those skilled in the art from various embodiments of the present disclosure to be described below.

### [Solution to Problem]

A method performed by a device in a wireless communication system according to the present disclosure may include determining whether to perform first-step data transmission, performing the first-step data transmission when it is determined that the first-step data transmission is performed, confirming completion of the first-step data transmission, and performing second-step data transmission.

According to an embodiment of the present disclosure, a method performed by a device included in a core network in a communication system may include receiving, from a first terminal, a first message for an avatar call between the first terminal and a second terminal, the first message including a first avatar media list available on the first terminal in relation to the avatar call, updating the first message to further include a second avatar media list that may be provided by the core network in relation to the avatar call, transmitting the updated first message to the second terminal, receiving, from the second terminal, a second message including one or more avatar media, each avatar media included in the first avatar media list or the second avatar media list, and configuring the avatar call based on the one or more avatar media.

According to an embodiment of the present disclosure, the method may further include confirming, based on the first message, that a call requested from the first terminal is the avatar call, wherein the confirmation that the call is the avatar call may be based on call type information indicating that the call requested from the first terminal is the avatar call, the call type information being included in the first message, or based on indication information for a base avatar associated with the avatar call, the indication information being included in the first message.

According to an embodiment of the present disclosure, the first message may further include a list of solutions associated with the base avatar associated with the avatar call or associated with the first avatar media list, and a type of each avatar media included in the first avatar media.

According to an embodiment of the present disclosure, one or more media function (MF) instances may be allocated for the avatar call on the core network, each MF instance may correspond to one or more of avatar storage (AS), animation data generation (ADG), avatar animation (AA), base avatar generation (BAG), scene management (SM), renderer, or avatar processing block management (APBM), and the second avatar media list may be associated with the one or more MF instances.

According to an embodiment of the present disclosure, the avatar call may be based on first data including a base avatar associated with the avatar call and second data including an avatar motion command associated with the avatar call.

According to an embodiment of the present disclosure, the first data may be indicated based on indication information for the base avatar associated with the avatar call included in the updated first message or content order information associated with the avatar call included in the updated first message.

According to an embodiment of the present disclosure, the updated first message may further include information indicating to skip reception of corresponding data when the corresponding data is stored.

According to an embodiment of the present disclosure, a device included in a core network in a communication system may include a transceiver, and a processor connected to the transceiver, wherein the processor is configured to receive, from a first terminal, a first message for an avatar call between the first terminal and a second terminal, the first message including a first avatar media list available on the first terminal in relation to the avatar call, update the first message to further include a second avatar media list that may be provided by the core network in relation to the avatar call, transmit the updated first message to the second terminal, receive, from the second terminal, the second message including one or more avatar media, each avatar media included in the first avatar media list or the second avatar media list, and configure the avatar call based on the one or more avatar media.

According to an embodiment of the present disclosure, it may be confirmed, based on the first message, that a call requested from the first terminal is the avatar call, and the confirmation that the call is the avatar call may be based on call type information indicating that the call requested from the first terminal is the avatar call, the call type information being included in the first message, or based on indication information for a base avatar associated with the avatar call, the indication information being included in the first message.

According to an embodiment of the present disclosure, the first message may further include a list of solutions associated with the base avatar associated with the avatar call or associated with the first avatar media list, and a type of each avatar media included in the first avatar media.

According to an embodiment of the present disclosure, one or more media function (MF) instances may be allocated for the avatar call on the core network, each MF instance may correspond to one or more of avatar storage (AS), animation data generation (ADG), avatar animation (AA), base avatar generation (BAG), scene management (SM), renderer, or avatar processing block management (APBM), and the second avatar media list may be associated with the one or more MF instances.

According to an embodiment of the present disclosure, the avatar call may be based on first data including a base avatar associated with the avatar call and second data including an avatar motion command associated with the avatar call.

According to an embodiment of the present disclosure, the first data may be indicated based on indication information for the base avatar associated with the avatar call included in the updated first message or content order information associated with the avatar call included in the updated first message.

According to an embodiment of the present disclosure, the updated first message may further include information indicating to skip reception of corresponding data when the corresponding data is stored.

According to an embodiment of the present disclosure, a method performed by a first terminal in a communication system may include transmitting a first message for an avatar call between a first terminal and a second terminal to a second terminal via a core network, the first message including a first avatar media list available on the first terminal in relation to the avatar call, receiving, from the core network, a configuration for the avatar call, and performing the avatar call.

According to an embodiment of the present disclosure, the avatar call may be based on one or more avatar media, and each avatar media is included in the first avatar media list or a second avatar media list that may be provided by the core network.

According to an embodiment of the present disclosure, it may be indicated, based on the first message, that a call requested from the first terminal is the avatar call, and the indication that the call is the avatar call may be based on call type information indicating that the call requested from the first terminal is the avatar call, the call type information being included in the first message, or based on indication information for a base avatar associated with the avatar call, the indication information being included in the first message.

According to an embodiment of the present disclosure, the first message may be updated by the core network to further include the second avatar media list and delivered to the second terminal.

According to an embodiment of the present disclosure, the first message may further include a list of solutions associated with the base avatar associated with the avatar call or associated with the first avatar media list, and a type of each avatar media included in the first avatar media.

According to an embodiment of the present disclosure, a first terminal in a communication system may include a transceiver, and a processor connected to the transceiver, wherein the processor is configured to transmit a first message for an avatar call between a first terminal and a second terminal to a second terminal via a core network, the first message including a first avatar media list available on the first terminal in relation to the avatar call, receive, from the core network, a configuration for the avatar call, and perform the avatar call.

According to an embodiment of the present disclosure, the avatar call may be based on one or more avatar media, and each avatar media may be included in the first avatar media list or a second avatar media list that may be provided by the core network.

According to an embodiment of the present disclosure, it may be indicated, based on the first message, that a call requested from the first terminal is the avatar call, and the indication that the call is the avatar call may be based on call type information indicating that the call requested from the first terminal is the avatar call, the call type information being included in the first message, or based on indication information for a base avatar associated with the avatar call, the indication information being included in the first message.

Various embodiments of the present disclosure described above are merely some of the preferred embodiments of the present disclosure, and various embodiments reflecting the technical features of various embodiments of the present disclosure may be derived and understood by those skilled in the art based on the detailed description to be described below.

### [Advantageous Effects of Invention]

Various embodiments of the present disclosure may provide a method and device for media communication in a wireless communication system.

Various embodiments of the present disclosure may provide a method for transmitting and receiving avatar call/communication data in a stepwise manner. For example, various embodiments of the present disclosure may relate to video/audio call and data transmission using Internet protocol (IP) multimedia subsystem (IMS) and web real-time communication (WebRTC).

The effects obtained from various embodiments of the present disclosure are not limited to the effects mentioned above, and other effects not mentioned may be clearly derived and understood by those skilled in the art based on the detailed description below.

### [Brief Description of Drawings]

FIG. 1 is a diagram illustrating an example of an avatar call scenario between user A and user B according to various embodiments of the present disclosure.
FIG. 2 is a diagram illustrating an example of an avatar processing block and an avatar media processing procedure according to various embodiments of the present disclosure.
FIG. 3 is a diagram illustrating an example of a network structure including a data channel server in a communication system according to various embodiments of the present disclosure.
FIG. 4 is a flowchart illustrating an example of a procedure according to various embodiments of the present disclosure.
FIG. 5 is a flowchart illustrating an example of a procedure according to various embodiments of the present disclosure.
FIG. 6 is a flowchart illustrating an example of a procedure according to various embodiments of the present disclosure.
FIG. 7 is a flowchart illustrating an example of a procedure according to various embodiments of the present disclosure.
FIG. 8 is a flowchart illustrating an example of a procedure according to various embodiments of the present disclosure.
FIG. 9 is a flowchart illustrating an example of a procedure according to various embodiments of the present disclosure.
FIG. 10 is a flowchart illustrating an example of a procedure according to various embodiments of the present disclosure.
FIG. 11 is a flowchart illustrating an example of a procedure according to various embodiments of the present disclosure.
FIG. 12 is a flowchart illustrating an example of a procedure according to various embodiments of the present disclosure.
FIG. 13 is a diagram comparing an Early-session according to various embodiments of the present disclosure with a conventional early session.
FIG. 14 is a flowchart illustrating an example of a procedure for an avatar call according to various embodiments of the present disclosure.
FIG. 15 is a flowchart illustrating an example of a procedure for an avatar call according to various embodiments of the present disclosure.
FIG. 16A is a flowchart illustrating an example of a procedure for an avatar call according to various embodiments of the present disclosure.
FIG. 16B is a flowchart illustrating an example of a procedure for an avatar call according to various embodiments of the present disclosure.
FIG. 16C is a flowchart illustrating an example of a procedure for an avatar call according to various embodiments of the present disclosure.
FIG. 17 is a flowchart illustrating an example of a procedure for an avatar call according to various embodiments of the present disclosure.
FIG. 18A is a flowchart illustrating an example of a procedure for an avatar call according to various embodiments of the present disclosure.
FIG. 18B is a flowchart illustrating an example of a procedure for an avatar call according to various embodiments of the present disclosure.
FIG. 18C is a flowchart illustrating an example of a procedure for an avatar call according to various embodiments of the present disclosure.
FIG. 18D is a flowchart illustrating an example of a procedure for an avatar call according to various embodiments of the present disclosure.
FIG. 18E is a flowchart illustrating an example of a procedure for an avatar call according to various embodiments of the present disclosure.
FIG. 19 illustrates an example of a functional structure of a terminal according to embodiments of the present disclosure.
FIG. 20 illustrates an example of a functional structure of a core network entity according to embodiments of the present disclosure.

### [Mode for the Invention]

Terms used in the present disclosure may be used only to describe specific exemplary embodiments rather than restricting the scope of other exemplary embodiments. Singular forms may include plural forms unless the context clearly indicates otherwise. All terms used herein including technical and scientific terms have the same meanings as those that are generally understood by those skilled in the art to which the present disclosure pertains. Terms defined in a general dictionary among terms used in the present disclosure may be interpreted as meanings that are the same as or similar to meanings within a context of the related art, and are not interpreted as ideal or excessively formal meanings unless clearly defined in the present disclosure. In some cases, terms may not be interpreted to exclude exemplary embodiments of the present disclosure even though they are defined in the present disclosure.

In various embodiments of the present disclosure described below, a hardware approach will be described as an example. However, since various embodiments of the present disclosure include technology using both hardware and software, various embodiments of the present disclosure do not exclude a software-based approach.

In the present disclosure, "a/b/c" may be understood to mean at least one of a, b, or c.

The present disclosure provides a mobile communication network-based multimedia call service in which different data are transmitted in a stepwise manner, and data transmitted in a first step (e.g., a transmission step performed prior to or immediately before a call) are utilized based on data transmitted in a second step (e.g., a transmission step performed after a call session is established), wherein at least one of the following may be provided:
- According to various embodiments of the present disclosure, a method for negotiation via a mobile communication network and allocation of computing resources of the mobile communication network in transmitting data for a multimedia call between UEs may be provided.
- According to various embodiments of the present disclosure, a method for transmitting and receiving first-step data and/or second-step data may be provided. For example, a method for identifying first-step data may be provided, and a method for determining whether data identified as first-step data has already been stored, and initiating and completing transmission if the data has not been stored or initiating transmission of second-step data without receiving the first-step data if the data has been stored may be provided.

According to various embodiments of the present disclosure, a method for identifying a data type (base avatar) and specific data (model ID) belonging to a first step may be provided.

According to various embodiments of the present disclosure, a method for providing information for determining whether some or all of the data belonging to a first step has been already received and a method for making the determination may be provided.

According to various embodiments of the present disclosure, a method for initiating transmission of data belonging to a second step after reception of data belonging to a first step is completed and a method for indicating the same may be provided.

According to various embodiments of the present disclosure, a method for performance negotiation and allocation of computing resources of a mobile communication network in transmitting data belonging to a second step between UEs may be provided.

### [Avatar Call Service]

The present disclosure may provide a method for transmitting second-step data in response to completion of transmission of first-step data in a multimedia call service using a means that displays a result generated by combining the first-step data and the second-step data. For example, the first and second data are insufficient or impossible to be used as a means of conveying a user's intention when used individually, but combination of the first and the second data may enable conveyance of a user's intention. Another characteristic is that the first data is discontinuously transmitted, i.e., large-volume data is delivered in a one-time transmission and is relatively vulnerable to loss occurring during transmission, whereas the second data is transmitted in real time, i.e., relatively small-volume data is continuously transmitted, requires low transmission latency, and may be negligible even if loss occurs. The above-described characteristics of the first and second data are merely examples, and the present disclosure is not limited thereto.

An example of the multimedia call service with these characteristics may include an avatar call service currently under consideration by the 3rd Generation Partnership Project (3GPP). In this case, as the first-step data, avatar model data may be considered, and as one of the second-step data, command information for moving an avatar may be considered.

The present disclosure may provide a method for transmitting avatar model data having a user's actual or intended appearance by considering the avatar model data as the first-step data.

In an embodiment, as the avatar model data, a three-dimensional object and mesh, texture, metadata, and the like for specifying the three-dimensional object may be used.

In another embodiment, the avatar model data may be a trained artificial intelligence (AI) model itself, or an app and executable code including the AI model.

Since the 3GPP has determined to use the term "base avatar" to collectively refer to the avatar model data, the present disclosure will also use the term "base avatar" to collectively refer to the avatar model data. The present disclosure is not limited to a specific technology, and all data that has a user's actual or intended appearance and may be changed according to additional input is referred to as the "base avatar" and is classified as the first-step data in the present disclosure.

The present disclosure classifies, as the second-step data, avatar motion commands that may be used in combination with the avatar model data to change the avatar model data according to a user's posture or facial expression.

In an embodiment, as the animation data, a blendshape command (facial expression description. e.g., raises the left eyebrow), a facial landmark command (e.g., move an identifier (ID) having a certain number among facial feature points by a certain amount in X, Y, and Z directions), a skeleton animation command (e.g., rotate the right elbow joint by how many degrees), a text description (e.g., text sentence describing a user's appearance), or the like may be used. Furthermore, the animation data may be triggered by audio and/or the audio may also be used as input.

Since the 3GPP has determined to use the term "animation data" for the avatar motion command, the present disclosure will also use the term "animation data" for the avatar motion command. The present disclosure is not limited to a specific technology, and all input data that allows the base avatar to change according to the user's appearance or intention is referred to as the "animation data" and classified as the second-step data in the present disclosure.

In the avatar communication to which the present disclosure is applicable, with only one of the base avatar, which is first-step data, and the animation data, which is second-step data, it is impossible or unnatural to convey the user's intention. Therefore, it may be preferable to initiate the transmission of the second-step data after the transmission of the first-step data is complete. However, the present disclosure is not necessarily limited thereto.

### [Service Configuration]

A scenario assumed in the description of various embodiments of the present disclosure is an avatar call between user A and user B. However, this is for convenience of description and the present disclosure is not limited thereto. For example, the present disclosure may also be applied to avatar communication between a first device and a second device within a communication system.

In the avatar call scenario between the users A and B, the base avatar pre-created by the user A (or sender) is moved and displayed on a remote user equipment (UE) (or a receiving UE) of the user B (or recipient) based on a user A's facial expressions and motion captured by a UE (or a transmitting UE). It goes without saying that the reverse scenario, i.e., the user B's base avatar is displayed on the user A's UE in the same manner, and therefore, will not be separately described in order to avoid complexity of description.

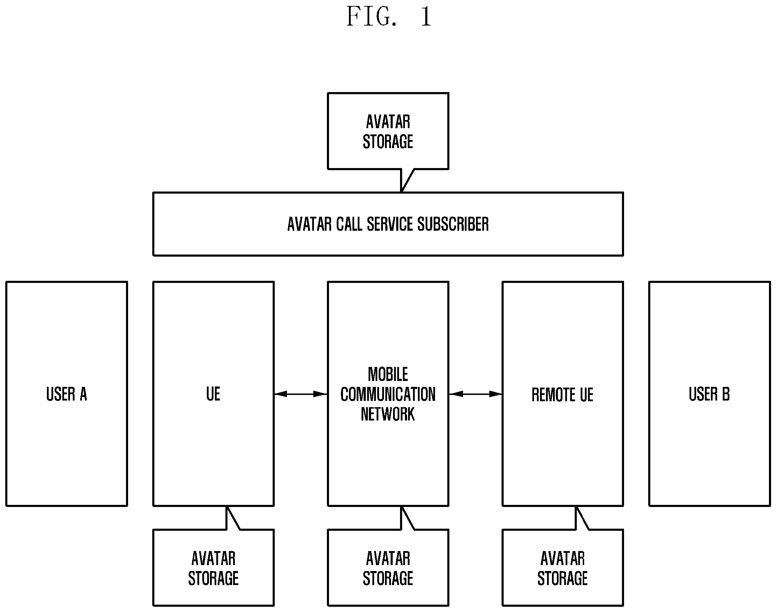

FIG. 1 is a diagram illustrating an example of an avatar call scenario between user A and user B according to various embodiments of the present disclosure. More specifically, FIG. 1 illustrates that, when the users A and B make an avatar call using the UE and the remote UE, respectively, a connection is attempted within an avatar call service provider's service and is established through mediation of a mobile communication network.

The users A and B may be searched and connected within the same avatar call service provider's service (e.g., a metaverse service). The network providers (e.g., mobile communication services) used by the users A and B may be the same or different.

In the present disclosure, the mobile communication network may exist between the UE and the remote UE. The avatar call service provider may use a network service to mediate the avatar call.

In the present disclosure, the avatar call service may be composed of a combination of the base avatar, which is the first-step data, and the animation data, which is the second-step data. Other real-time data, such as video, audio, and motion, may belong to one of the animation data or be transmitted in accordance with a video call service method.

In the present disclosure, the base avatar may be stored in the avatar storage included in the sender UE, the network, the recipient UE (remote UE), etc., and may be newly or additionally received and updated during the avatar call initiation process. That is, the base avatar may be stored in at least one of avatar storage of the sender UE, avatar storage of the network, and avatar storage of the recipient UE, and may be newly or additionally received and updated during the avatar call initiation process.

At least one of a base avatar, animation data, an animated avatar, a scene, and a rendered scene to be described below is exchanged between the UE and the remote UE.

### [Process]

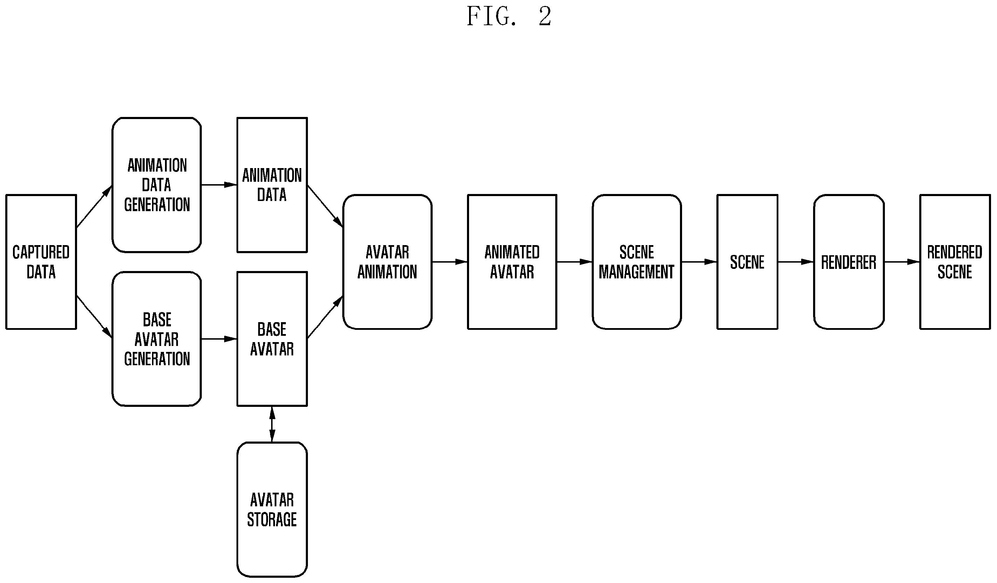

FIG. 2 is a diagram illustrating an example of an avatar processing block and an avatar media processing procedure according to various embodiments of the present disclosure.

Referring to FIG. 2, avatar processing blocks that may be considered to express a user's facial expressions or gesture as an avatar are represented by gray blocks, and processing procedures therebetween and avatar media as main inputs and outputs are represented by white blocks. Each process may be executed on a UE, a network, or a remote UE, and the execution location may be determined as a result of a separate determination and negotiation process. For example, when executed on the network, each process may be executed on a media function (MF) within the network, but is not limited thereto.

The captured data refers to information such as video, audio, and motion sensors based on the acquired user's facial expressions and/or posture. For example, when the user A displays, on the remote UE, an avatar that mimics his or her facial expressions and posture, the user A's UE captures the user A's facial expressions and posture to generate captured data.

When there is no previously generated base avatar, a user may record major facial expressions, lines, and the like according to guidance of an avatar application. The captured data from the recorded motion is applied to a base avatar generation (base avatar generation unit), and is generated as a base avatar. Since the base avatar has various options, such as requiring post-processing that may take from real time to several hours depending on a solution and quality, the base avatar is generally generated and stored in advance before an avatar call.

The avatar storage serves to store the base avatar and provide the base avatar upon request. For example, when the users A and B make the avatar call, the avatar storage may be a local storage of the user A's UE, a storage on a mobile communication network (IMS) that mediates the avatar call, a storage of an over the top (OTT) provider that mediates an OTT avatar call using the mobile communication network, or a local storage of the user B's UE (remote UE) that has previously performed an avatar call with the user A.

The animation data is generated from the captured data and is a command that moves the base avatar in accordance with the user's motion. The technology applied to the animation data may vary depending on the technology applied to the base avatar. For example, when the base avatar is a generative AI model, the animation data may be long-form textual descriptions, such as prompts, that are acceptable by the corresponding AI model. As another example, when the base avatar is a 3D graphic model, the animation data may be a list of XYZ coordinate movement information for moving each point of a graphic object.

Therefore, the animation data generation (animation data generation unit), which generates the animation data, may communicate with avatar animation (avatar operation unit) and avatar storage to determine the technology applied to the base avatar and whether the technology (the technology applied to the base avatar) can be supported in the avatar animation.

The animated avatar is the base avatar modified as indicated by the animation data. As a result of the modification, the user A's animated avatar may mimic the user A's posture and facial expressions. The animated avatar may be within a scene that includes the users A and B, or other users, and objects representing virtual spaces or real spaces. The renderer generates a rendered scene such that a projection plane at a position determined in consideration of a position of a specific user, for example, a relative location between the user B and the remote UE with respect to the scene, constitutes all or a part of a display of the remote UE.

The captured data, the base avatar, the animation data, the animated avatar, the scene, and the rendered scene applied to and generated by the above-described processing blocks are collectively referred to as the "avatar media" in the present disclosure. In the description of various embodiments of the present disclosure, the avatar media may include at least one of the captured data, the base avatar, the animation data, the animated avatar, the scene, and the rendered scene. Unless specifically stated otherwise, the media in the description of various embodiments of the present disclosure may be the avatar media.

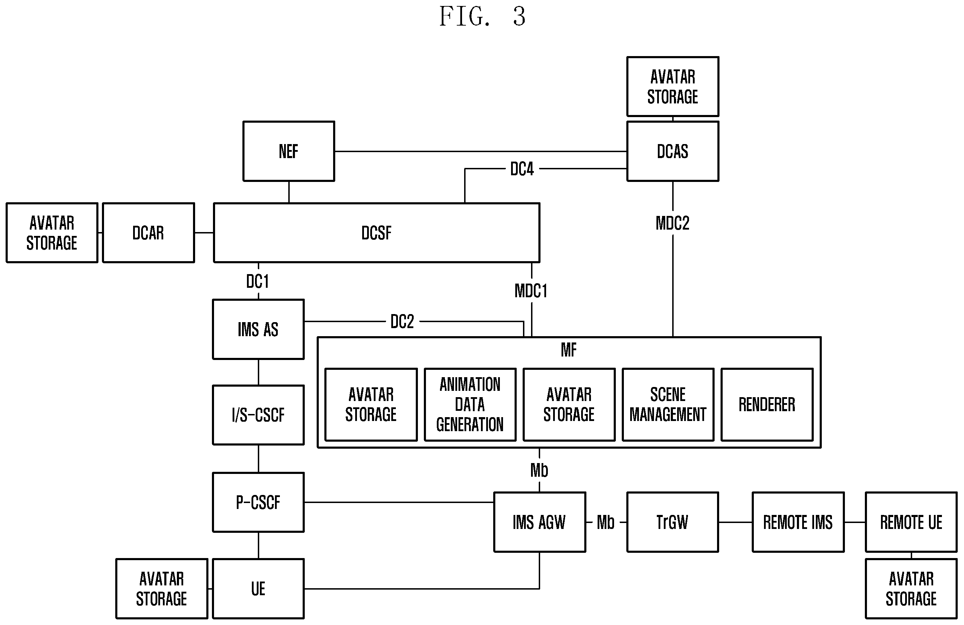

The above-described UE, IMS network, and processing unit may be represented as architecture, as illustrated in FIG. 3, which will be described below. In the present disclosure, when modifications to components of the conventional IMS network are not required, descriptions thereof will be omitted. Additional operations will be described for a case in which the media function (MF) includes the processing blocks specified in the present disclosure which will be described below.

### [IMS Network Structure]

FIG. 3 is a diagram illustrating an example of a network structure including a data channel server in a communication system according to various embodiments of the present disclosure. This will be described with reference to FIGS. 1 to 2, and redundant descriptions will be omitted.

Referring to FIG. 3, a user equipment (UE) may communicate with other UEs and an IP multimedia core network (IM CN) subsystem components located in a remote IMS network via an IM CN subsystem. The IM CN subsystem may include a P-CSCF, an I/S-CSCF, an IMS AS, an IMS HSS, an IMS AGW, a DCSF, an MF, a NEF, a data channel application server (DCAS), and/or a data channel application repository (DCAR), and the components may perform the following functions.
- Proxy Call Session Control Function (P-CSCF): The P-CSCF may perform a first contact point function for a UE to access the IMS.
- Interrogating/Serving CSCF (I/S-CSCF): The I-CSCF may perform a contact point function for a network provider's subscriber or a roaming user currently located in a network provider's service area. The S-CSCF may handle an actual user session state of the network.
- IMS Application Server (IMS AS): The IMS AS may provide and execute Internet multimedia (IM) value-added services. Additionally, the IMS AS may influence session initiation protocol (SIP) sessions by acting on behalf of services supported by a provider network.
- IMS Home Subscriber Server (IMS HSS): The IMS HSS may serve as a database that stores information about users.
- IMS-Access Gateway (IMS-AGW): The IMS-AGW is located in a media transmission path and may manage network addresses associated with inbound and outbound media streams.
- Data Channel Signaling Function (DCSF): The DCSF may perform the following functions:
   - - Management and control of data channels including a bootstrap data channel
   - - Data channel management and event generation/reception through communication with the IMS AS
   - - Management and distribution control of data channel applications
   - - Communication with a 5G network function (NF) to provide data channel application services
   - - Serving as a proxy for resource distribution of a data channel application server
- Media Function (MF): It may perform the following functions:
   - - Management and control of media resources to be transmitted over a data channel, including the bootstrap data channel
   - - Serving as a proxy for data exchange between an endpoint of the data channel connected to the UE and other endpoints
- Network Exposure Function (NEF): It may provide a means to safely expose services and capabilities provided by 3GPP network functions, such as third-party, internal exposure/re-exposure, application functions, and edge computing. The NEF may receive information (based on the exposed capabilities of other NF(s)) from other NFs. The NEF may store the received information as structured data using a standardized interface to the data storage network function. The stored information may be re-exposed by the NEF to other NFs and AFs and used for other purposes, such as analysis.
- Data Channel Application Server (DCAS): It may be located in an IMS provider network or a third-party network. In the present disclosure, the web applications provided by the data channel application server may be referred to as a data channel application (DCA). A UE participating in a service (e.g., a real-time interaction service) provided by the data channel application may exchange data required by the service directly or via an intermediate node using a data channel (DC) with other UEs participating in the same service, and communicate with the data channel application server using a bootstrap data channel (BDC).
- Data Channel Application Repository (DCAR): It may store and manage data channel applications and may be located inside or outside the data channel server.

The interface between the components may be expressed as the following reference points in the IMS:
- Mb: Reference point supporting the IMS media transmission between the IMS components

The interface between the components may be expressed as the following reference points supporting data channel services in the IMS:
- DC1: Reference point between the DCSF and the IMS AS
- DC2: Reference point between the IMS AS and the MF
- DC4: Reference point between the DCSF and the DC application server

The interface between the components may be expressed as the following reference points handling data channel media in the IMS:
- MDC1: Reference point for data channel media transmission between the data channel media function (which may be the MF) and the DCSF
- MDC2: Reference point for data channel media transmission between the data channel media function (which may be the MF) and the DC application server

The SIP is an application-layer signaling protocol that specifies the procedures for intelligent UEs intending to communicate over the Internet to identify and locate each other, and to create, delete/modify multimedia communication sessions between the intelligent UEs. The SIP is a request/response structure that controls the creation, revision, and termination of multimedia service sessions, such as Internet-based conference, telephone, voicemail, event notification, and instant messaging, and may be used with both transmission control protocol (TCP) and user datagram protocol (UDP). The SIP may use a SIP uniform resource locator (SIP URL), which is similar to an email address, to distinguish each user, thereby receiving services independently of an IP address. The SIP is a text-based protocol developed by using many parts of hypertext transfer protocol (HTTP) and simple mail transfer protocol (SMTP) as they are, and is therefore easy to implement, and has flexibility and extensibility to support various services by combining with many other protocols used on the Internet. The SIP is a simpler protocol corresponding to ITU-T's H.323, and was proposed as RFC 2543 by the Internet Engineering Task Force (IETF) Multiparty Multimedia Session Control (MMUSIC) Working Group in 1999. Subsequently, the SIP was revised by the separately formed IETF SIP Working Group, resulting in the establishment of the RFC 3261 standard in July 2002.

In order to provide a service (e.g., a real-time interaction service) in a communication system according to various embodiments of the present disclosure, an agreement on the media session constituting the service should be established between user UEs participating in the service. In the communication system according to various embodiments of the present disclosure, to provide the service (e.g., a real-time interaction service), an agreement on the media session may be performed through session description protocol (SDP) negotiation.

The SDP may be included in a SIP message. The SDP is an ASCII-based protocol for describing a multimedia session and related scheduling information. The SDP delivers information about media streams of a multimedia session to enable joining the session. The multimedia session is defined as a set of media streams over duration, and the time during which the session proceeds does not need to be continuous. The multicast-based session on the internet basically serves two purposes: a means to notify the existence and time of the session, and a means to deliver the session's participation information. In the unicast environment, the multicast-based session is intended to serve the latter purpose. The SDP information content may include a session name and purpose, session duration, session configuration media, media reception information, etc.

Hereinafter, various embodiments of the present disclosure will be described under the assumption that the service provided in the communication system is a real-time interaction service, but the present disclosure is not limited thereto.

### [UE-Network-UE Performance Negotiation Method]

The information and input/output interface provided by each processing block to establish a process flow may be configured as follows in the IMS network.

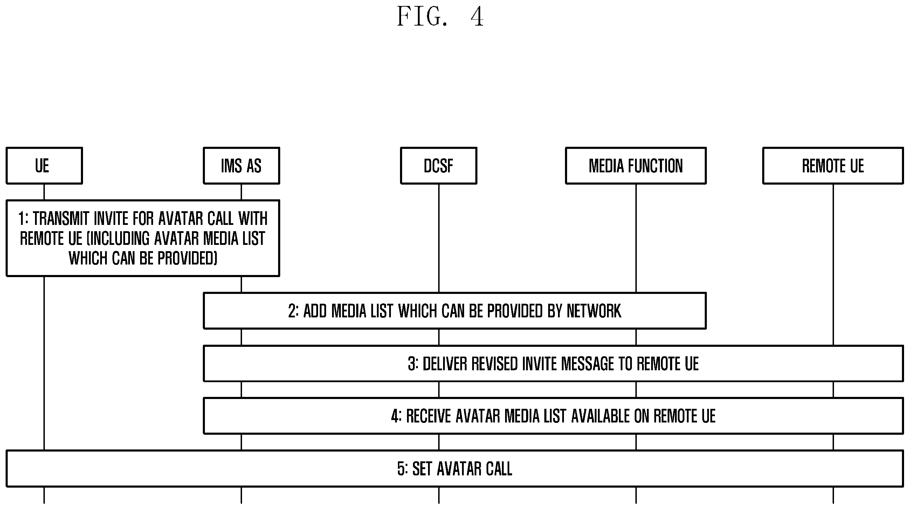

FIGS. 4 to 9 are flowcharts illustrating an example of procedures according to various embodiments of the present disclosure. Specifically, FIGS. 4 to 9 illustrate flowcharts of a case in which, in response to an avatar call request from a UE, an IMS network as an intermediary determines whether to execute some or all of avatar processing blocks and executes the determined avatar processing blocks. Various changes may be made to the method illustrated in the flowcharts of FIGS. 4 to 9. For example, although illustrated as a series of steps, various steps in each drawing may overlap, occur in parallel, occur in different orders, or occur multiple times. In other examples, steps may be omitted or replaced with other steps.

A procedure according to an embodiment of the present disclosure will be described with reference to FIG. 4.
1. The UE transmits an INVITE message to the IMS AS for an avatar call with the remote UE. The message includes an avatar media list (including applied solutions, codec, and profile) available on the UE.
2. The IMS AS stores the list of media received from the UE, and confirms a list of media that may be provided by the network and adds the list. The IMS AS may store the avatar media list included in the received INVITE message and/or add an avatar media list that may be provided by the network.
3. The IMS AS delivers, to the remote UE, a revised INVITE message including the list of media that may be provided by the network. The IMS AS may generate/ acquire a revised INVITE message including a revised avatar media list in which an avatar media list that may be provided by the network is added to the avatar media list included in the INVITE message received from the UE, and may deliver the revised INVITE message to the remote UE.
4. The remote UE selects media available on the remote UE from the received list of media and responds to the selected media.
5. The IMS AS applies priorities among the media responded from the remote UE and the MFs for supporting the media to select and configure solutions to be supported by the network.

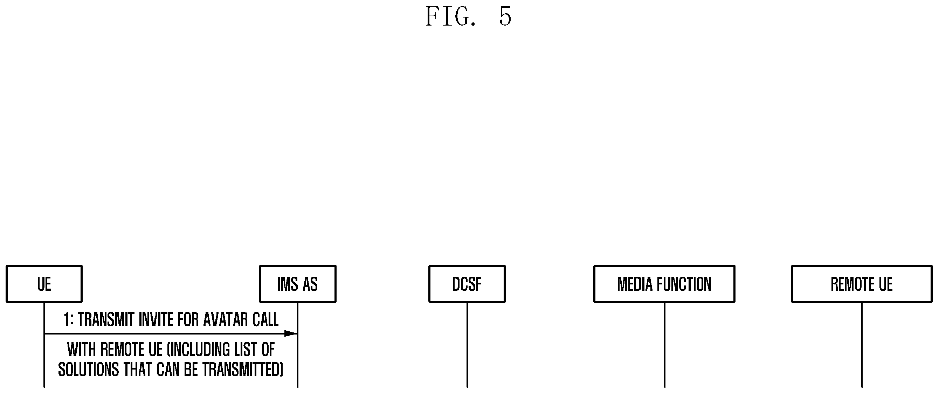

Referring to FIG. 5, step 1 of FIG. 4 may be performed in more detail as follows.
1. The UE transmits the INVITE message for the avatar call to the IMS AS. The INVITE message includes call type information indicating that the corresponding call is an avatar call, identification information that may identify a specific base avatar to be used in the avatar call, a list of solutions applied to the avatar media to be used in the avatar call, and the like. Arguments that may be specified are as follows, and at least some of the following arguments may be included in the INVITE message:
   - 1. Conversation-Type: It specifies a call type to be executed. The conventional audio and video, etc., may be identified as a type of media included in a session, but, in order to enable a new third type of call, which is not an audio call or a video call, while using the conventional media types such as audio and video, it is necessary to separately designate a call type. In an embodiment, when a value of the Conversation-Type field is 3gpp-avatar-call, the Conversation-Type may indicate that a call intended by the UE is an avatar call, even when only the audio and video are transmitted.
   - 2. Base-Avatar-Identifier: It is an identifier that may identify a base avatar to be used in a call. The identifier may be an identifier for the entire set of components for expressing the base avatar, or an identifier of a manifest file that describes the set of components. The manifest file may include information that enables confirmation of all or some components of the configuration. When the Conversation-Type is not used, the type of call to be performed may be determined to be an avatar call, depending on the presence of the Base-Avatar-Identifier field.
   - 3 List of Solutions: It is a list of identifiers for solutions applied to the base avatar and the avatar media. The list of solutions may be provided as one list of all solutions applied to one or more avatar media, or as a sub-attribute of each avatar media within the avatar media list.
   - 4. List of Avatar Media Candidate Descriptors: It is a list of profiles and transmission information for the avatar media that UE intends to provide. The UE may provide at least one avatar media and profile information for the corresponding media. The network or remote UE that selects to receive one of the avatar media from the UE executes an appropriate avatar processing block to process the received avatar media. The selection of one of the multiple avatar media provided by the UE is determined in consideration of network resource availability, a user billing system, etc.
   - 5. AvatarMedia-Type: It represents a type of each avatar media. For example, 3gpp-avatar-media-captured-data, 3gpp-avatar-media-base-avatar, 3gpp-avatar-media-animation-data, 3gpp-avatar-media-animated-avatar, 3gpp-avatar-media-scene, and 3gpp-avatar-media-rendered-scene may represent the base avatar, the animation data, the animated avatar, the scene, and the rendered scene, respectively.
   - 6. List of requested QoE metrics: It specifies performance attainment targets (QoE, quality of experience) in an end-to-end (UE-mobile communication network-remote UE) for an avatar call. Alternatively, the resource or performance attainment targets of the avatar processing block generated and executed in the network or the remote UE to process each avatar media are displayed as a list of pairs of items (metrics type) and target values. At least some of the following may be included in the list of requested QoE Metrics and/or be understood as the requested QoE metric.
      - - End-to-end-latency: It represents a difference between a time point an event measured by the UE occurs and a time point the corresponding event is displayed on the other UE.
      - - Sending-UE-processing-delay: It represents a difference between a time point an event measured by the transmitting UE occurs and a time point the corresponding event is transmitted from the UE to the network.
      - - Sending-UE-delivery-latency: It represents latency during data transmission between the transmitting UE and the network.

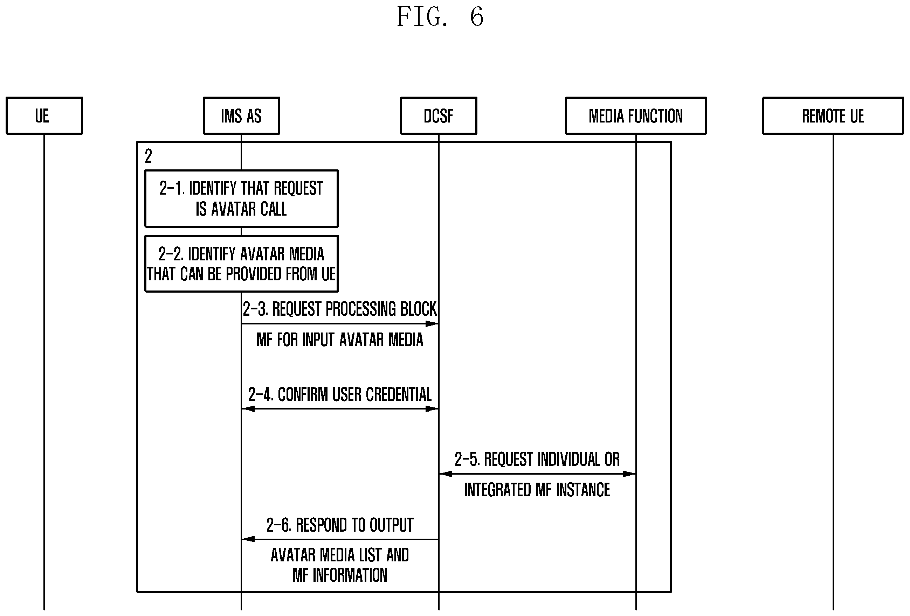

Referring to FIG. 6, step 2 of FIG. 4 may be performed in more detail as follows.

2-1. The IMS AS determines that the call requested from the UE is the avatar call based on whether the Conversation-Type value in the INVITE message content is 3gpp-avatar-call or the Base-Avatar-Identifier is present. The IMS AS may determine whether the requested call is the avatar call based on the parameters included in the INVITE message. For example, when the Conversation-Type included in the INVITE message is the 3gpp-avatar-call and/or the INVITE message includes the Base-Avatar-Identifier, the requested call may be determined as the avatar call.

2-2. The IMS AS identifies, from the INVITE message content, the avatar media list that may be provided by the UE and the profile and solution information applied to each avatar media.

2-3. The IMS AS communicates with the DCSF to request the identification of whether the avatar processing block that takes the avatar media specified/indicated in the INVITE message of the UE as input and outputs the avatar media of a subsequent stage is supportable in the network as the MF instance.
- The mobile communication network may provide instances (and computing resources) for general-purpose purposes, such as media conversion or network computing, and the allocated (or instantiated) instances may execute processes (e.g., encoding, transcoding) for specific purposes.
- The IMS network, which is an example of the mobile communication network, may allow the data channel signaling function (DCSF) to handle instance allocation and instance state management for the MF for process execution used during the communication process, and allow the MF to execute the MF instance. In edge computing that is another example of the mobile communication network, an edge enabler server (EES) may be responsible for allocating instances, and an edge application server (EAS) may be responsible for executing instances. In WebRTC that is another example of the mobile communication network, the application function (AF) is responsible for allocating instances, and the application server (AS) is responsible for executing instances.
- In the case of the avatar call, when allocating the MF instance, the DCSF may allocate avatar storage, animation data generation (ADG), avatar animation (AA), scene management (SM), base avatar generation (BAG), renderer, etc., that are special-purpose MFs for the avatar call, rather than general-purpose computing functions. Additionally, it may be considered that avatar processing block management (APBM) for managing the avatar processing blocks is allocated as the MF instance.
- The IMS AS may create the avatar media list that may be generated in the network by using the avatar media list indicated as being supportable as input by the UE. From the list of input avatar media and the list of output avatar media, a list of combinations of the avatar processing blocks for connecting these lists, that is, for generating output from input may be generated.
- The IMS AS may inquire of the DCSF whether each combination can be generated as the MF instance, from the created list of combinations of avatar processing blocks.
- The IMS AS may request confirmation of whether one or more integrated MF instances can be generated or allocated. For example, a resource request function such as Nmf_MRM_Create may be used. The request may include at least some of the following arguments:
   - - Base Avatar Identifier
   - - Avatar Media Candidate Descriptors
   - - List of Solutions
   - - List of Avatar Processing Blocks to be combined
   - - List of requested QoE metrics

2-4. The DCSF may communicate with the HSS, etc., via the IMS AS to select the type of MF instances and resources appropriate for the user's billing system. The MF instance types and/or resources may be configured/selected based on the user's billing system. For example, even for the same renderer instance, the allocation of high-specification computing resources may not be allowed for low-cost subscriber plans. Alternatively, a local provider network in a roaming area that a user visits may not support the corresponding renderer MF.

2-5. The DCSF requests the allocation of the combinations requested from the IMS AS to the MF as instances.
- Each combination of the avatar processing blocks may be allocated and executed in the form of the MF instance.
- The MF instance requested by the DCSF may be an individual avatar processing block or a concatenation of multiple avatar processing blocks. That is, the processes of the ADG, the base avatar generation (BAG), the AA, the avatar storage (AS), the SM, and the renderer may each be allocated to separate individual MF instances. Alternatively, the integrated MF instances may be allocated to all possible combinations, such as a combination of the ADG and AA, a combination of the ADG, AA, and AS, or a combination of the ADG, AA, SM, and Renderer, or at least some of all possible combinations.

2-6. DCSF may provide, in response to a request from the IMS AS, individual and integrated MF instances that are confirmed to be generable by the MF, as an avatar media list that can be output (generated) for each input avatar media.
- The outputtable avatar media list provided by the DCSF includes information about each avatar media and access information for the individual or integrated MFs capable of generating the corresponding avatar media.

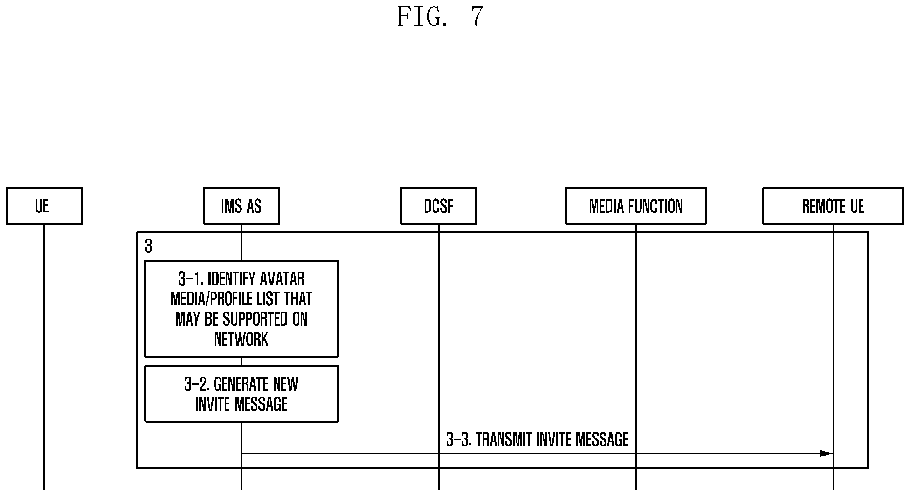

Referring to FIG. 7, step 3 of FIG. 4 may be performed in more detail as follows. FIG. 7 illustrates some of the procedures (the procedure for adding the avatar media list that may be provided by the network) in step 2 of FIG. 4. Steps 3-1 and 3-2 of FIG. 7 may also be understood as some of the procedures in step 2 of FIG. 4.

3-1. The IMS AS analyzes the response received from the DCSF to identify the list of avatar media and profiles that the network may support for each avatar media that may be provided from the UE, as well as the access information for the individual or integrated MF instances capable of generating the corresponding avatar media.

3-2. The IMS AS adds, to the avatar media list that may be provided from the UE, the avatar media list that can be supported and generable by the network, thereby generating a new INVITE message.
- For example, after the IMS AS receives, from the UE, the INVITE message in which only the captured data among the avatar media is transmitted, the IMS AS may receive, from the DCSF, a response indicating that two avatar media such as animation data and animated avatar may be generated.
- In this case, the animation data is generated from individual MF instances supporting the ADG, and the animated avatar is generated from the integrated MF instances supporting the ADG and AA.
- The IMS AS may provide the captured data transmitted from the UE, the animation data avatar media transmitted from the ADG MF instance, and the animated avatar media transmitted from the ADG-AA integrated MF instances to the remote UE.
- The integrated MF instance may not provide data exchanged between the individual MF instances in the form of the avatar media during internal data processing. For example, in an example where a primary integrated MF instance to which the ADG and the AA are connected is generated and a secondary integrated MF instance to which the scene management and the renderer are connected is generated, the animation data between the ADG and the AA may be generated or may not be generated. Similarly, the scene may be generated or may not be generated between the scene management and the renderer.
- The avatar media operates as a standard interface between different avatar processing block solutions. Therefore, for a solution in which two or more avatar processing blocks are combined, whether intermediate data generated during processing matches an avatar media specification, whether the intermediate data are exposed to another processing block, etc., may be left to an implementation of the corresponding solution provider.

3-3. The IMS AS transmits the INVITE message generated in step 3-2, including a UE's SIP address, to the remote UE.

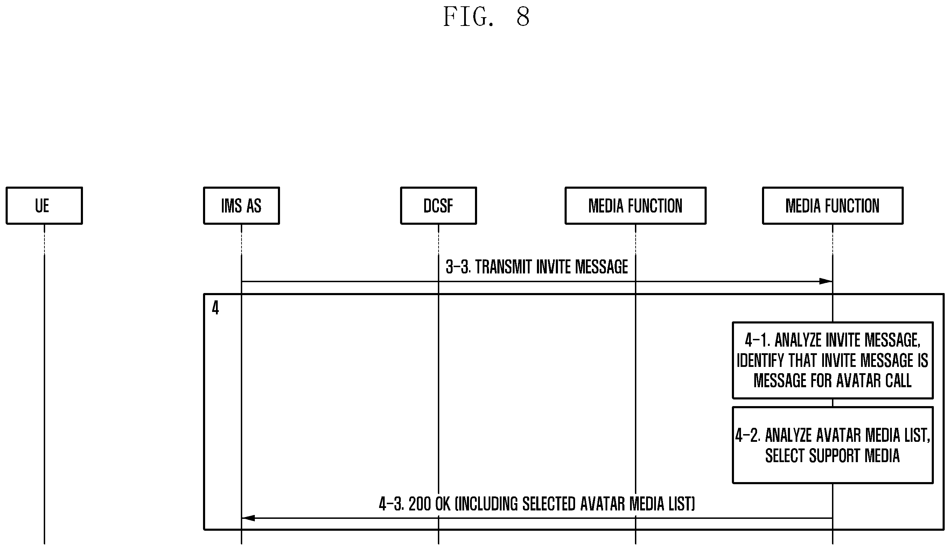

Referring to FIG. 8, step 4 of FIG. 4 may be performed in more detail as follows.

4-1. The remote UE receives an INVITE message and identifies that the INVITE message is a message for an avatar call. For example, the remote UE may identify that the INVITE message is for the avatar call based on at least one of the information/parameters included in the INVITE message.

4-2. The remote UE confirms the avatar media list and determine whether the avatar media is receivable by the remote UE. The remote UE may determine whether it receives/can receive the avatar media included in the avatar media list. For example, at least some of the avatar media included in the avatar media list may be determined to be receivable/to be received, and/or at least some of the avatar media included in the avatar media list may be determined to be unreceivable/not be received. For example, depending on a type of avatar media, when a large number of avatar processing blocks need to be processed after being received by the remote UE or when high performance is required, the remote UE may select or may not select the avatar media in view of performance that the remote UE may provide.

4-3. The remote UE returns, to the IMS AS, the avatar media list determined to be receivable. For example, the response message of the remote UE may use a 200 OK (successful response status code) message, but is not limited thereto. The response message of the remote UE may include the avatar media list along with Conversation-Type: 3gpp-avatar-call meaning that it may receive the avatar call, and the selection of the avatar media to be received by the remote UE is delivered through the corresponding avatar media list. In other words, the corresponding avatar media list may include the avatar media that the remote UE will receive/select. Alternatively, the response message of the remote UE may include the avatar media list but not include the indication that it may receive the avatar call.

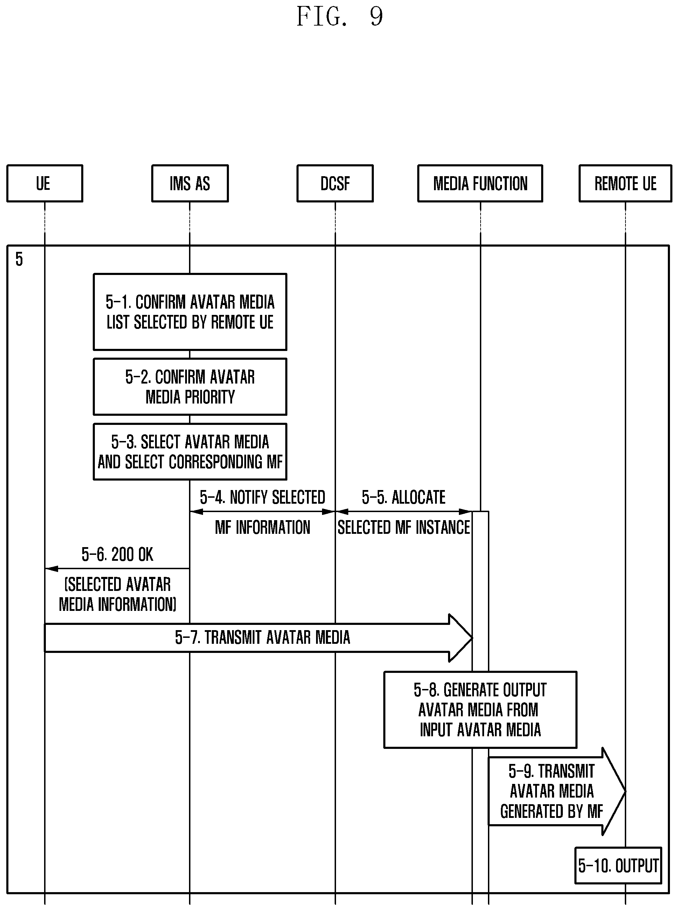

Referring to FIG. 9, step 5 of FIG. 4 may be performed in more detail as follows.

5-1. The IMS AS confirms the avatar media list selected by the remote UE from the response message (e.g., 200 OK message) of the remote UE received from the remote UE.

5-2. The IMS AS confirms the priority of the avatar media. The avatar call services from the avatar call service provider and the network provider may operate with priorities. The corresponding priorities may be determined in real time or in advance based on dynamic conditions, such as overall network situations and computing resource situations, or static conditions, such as the user's subscriber plan and the operating costs of the processing solution executed within the MF instance. Furthermore, when costs such as usage fees are incurred during processing by the determined individual or integrated MF, and thus, a limit (e.g., daily data limit, etc.) is applied to the corresponding billing, the avatar media connected to another MF instance may operate to be selected through UPDATE, etc., when the limit is exceeded, even after the avatar call has been initiated.

5-3. The IMS AS selects one (or at least some) of the avatar media lists presented/selected by the remote UE, based on the priorities as described above, and selects the individual or integrated MF instances that generate the corresponding avatar media.

5-4. The IMS AS notifies the DCSF of the selected MF instance. The MF instance may be in a state that is only confirmed as executable by the DCSF, or a state that is actually allocated but not executed.

5-5. The DCSF allocates or executes the notified MF and cancels the allocation of the remaining MFs.

5-6. The IMS AS returns the selected avatar media to the UE. For example, the response message of the IMS AS may use, but is not limited to, the 200 OK message. The response message of the IMS AS includes the information about the MF instance to receive the avatar media, along with the Conversation-Type: 3gpp-avatar-call meaning that the UE may receive the avatar call. The response message of the IMS AS may include the information about the avatar media selected by the IMS AS and the information about the MF instance for the corresponding avatar media.

5-7. The UE transmits the avatar media to the MF instance.

5-8. The MF instance generates output avatar media from the input avatar media received from the UE.

5-9. The MF instance transmits the avatar media generated by the MF to the remote UE.

5-10. The remote UE processes the avatar using the internal avatar processing block and outputs the processed avatar for display on a display device or the like.

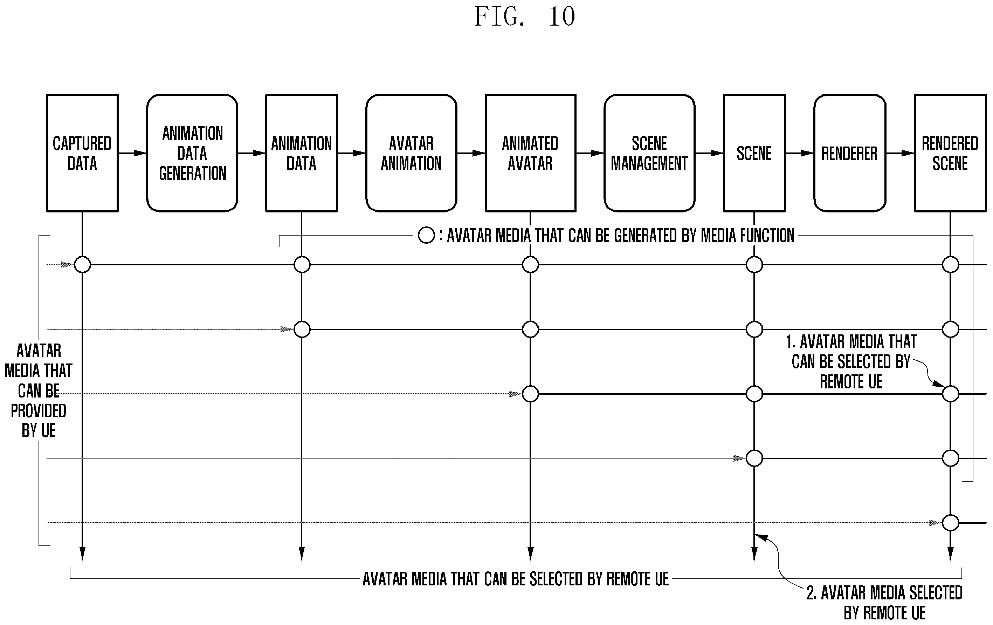

FIGS. 10 to 12 are flowcharts illustrating an example of procedures according to various embodiments of the present disclosure. More specifically, FIGS. 10 to 12 diagrammatically illustrate the process of determining the integrated MF instances for the avatar function according to the above-described UE-network-UE negotiation.

Referring to FIGS. 10 to 12, according to an embodiment, one or more types of avatar media that the UE may provide may be specified/indicated/displayed/instructed. In FIGS. 10 to 12, the avatar media is illustrated as a white circle.

According to an embodiment, one or more avatar media that the network may generate using the media function may be added. In FIGS. 10 to 12, the avatar media is illustrated as a gray circle.

According to an embodiment, the remote UE may select one or more avatar media it intends to receive. In FIGS. 10 to 12, the case where the scene is selected is illustrated as an example.

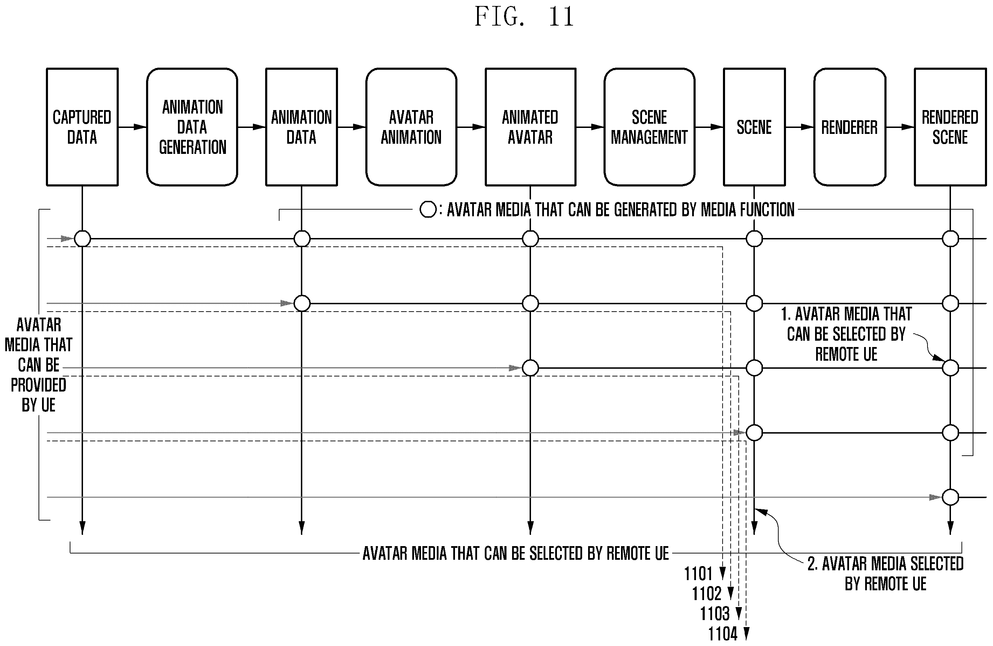

According to an embodiment, for the selection by the remote UE, the network may determine a path (illustrated as 101, 102, 103, and 104 in FIG. 11) that can be generated from the avatar media provided by the UE. The path corresponds to the avatar media processing procedure and may be configured to include at least a portion of the avatar processing blocks. The path may be determined based on the type of avatar media that the UE may provide, the avatar media that the network may generate using the media function, and/or the avatar media that the remote UE intends to receive.

In one example, when the remote UE selects the scene, the paths 101, 102, 103, and 104 may be determined to be available.

For example, for the path 101, the captured data provided by the UE may be received by the network, generated by the MF instance as the animation data, the animated avatar, and the scene, and transmitted to the remote UE.

For example, for the path 102, the animation data provided by the UE may be received by the network, generated by the MF instance as the animated avatar and the scene, and transmitted to the remote UE.

For example, for the path 103, the animated avatar provided by the UE may be received by the network, generated by the MF instance as the scene, and transmitted to the remote UE.

For example, for path 104, the scene provided by the UE may be delivered to the remote UE via the network.

The network may select one of the paths 101, 102, 103, or 104 in FIG. 11. The priority of the selection is as described in 5-2.

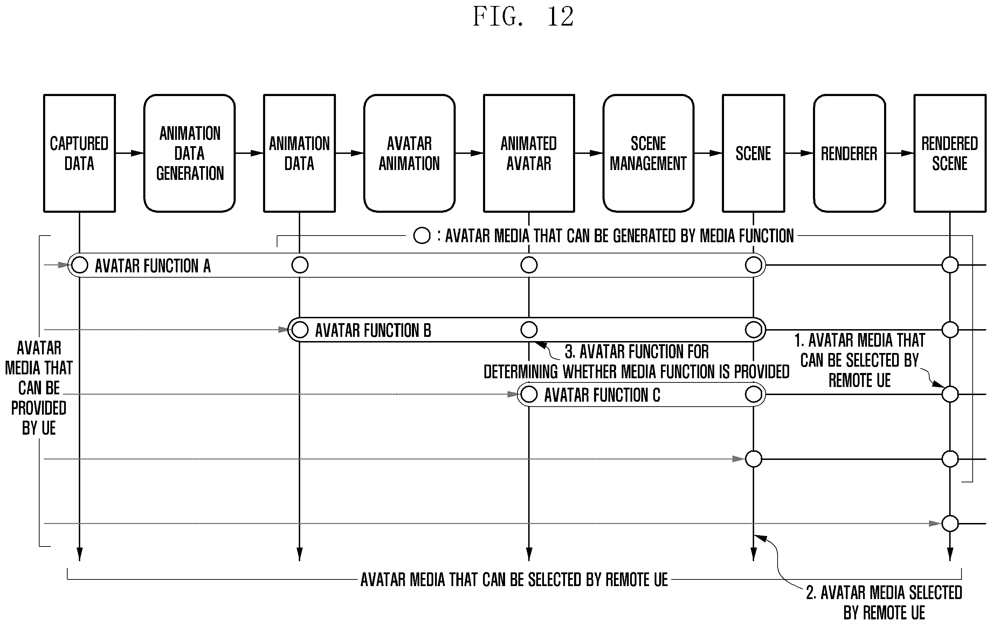

The network may generate one integrated avatar function (or integrated MF instance) for sections requiring multiple avatar functions. FIG. 12 illustrates an example of the integrated avatar function.

In one example, 1101, 1102, and 1103 of FIG. 11 may be generated and provided by avatar function A, avatar function B, and avatar function C of FIG. 12, respectively. When the network chooses to provide the avatar function B, the network may negotiate with the UE to allow the UE to provide the animation data to the network, negotiate with the DCSF, the MF, etc., to allocate and execute the MF instance for the avatar function B, and negotiate with the remote UE to receive the scene generated by avatar function B.

### [Method for Identifying, Transmitting, and Storing First-Step Data]

As described above, data transmitted in a multimedia call service, such as the avatar call, which is the background to the problem to be solved by the present disclosure, is realized by a combination of the base avatar, which is the first-step data characterized by the one-time transmission and being reusable, and the animation data, which is the second-step data characterized by being acquired, generated, and transmitted in real time. Since the first-step data may be reused after the current call and even in the future call, the first-step data may be stored for future reuse.

The storage location of the base avatar may be the storage location of the avatar call service provider mediating the communication, the mobile communication network to which the user subscribes, the mobile communication network to which the other party subscribes, the user's UE, the other party's UE, etc. In the present disclosure, the storage location is referred to as the avatar storage.

In the typical video or audio call, the specified video or audio data is transmitted after call negotiation between UEs. However, an embodiment of the present disclosure provides a method for identifying first-step data and includes a step of determining whether the data identified as the first-step data has already been stored in the avatar storage. When the data identified as the first-step data has been stored in the avatar storage, the first-step data has not been received and the second-step data transmission may be initiated. When the data identified as the first-step data has not been stored in the avatar storage, the first-step data transmission may be initiated, and the second-step data transmission may be initiated after the transmission is completed.

The method for identifying first-step data in an avatar call according to the present disclosure is as follows:
- [1] The base avatar is distinguished as an identifier.
- [2] The base avatar is distinguished as the manifest file describing the structure of the base avatar.
- [3] The syntax of the SDP message transmitted by the UE for the avatar call is distinguished by specifying that some content is the first step.
- The syntax of the message transmitted by the UE for the avatar call specifies and distinguishes that some content should be transmitted before other content, and that the completion of the content transmission is required. The content that should be transmitted/completed first may be identified as the first-step data.

A combination of one or more of the above-described methods may be used. This will be described in detail below.
[1] The method for identifying a base avatar as an identifier is as follows:
   The Base_Avatar_Identifier field is provided, and the identifier is indicated as a field value. The identifier may be a combination of the avatar call service provider identifier, the user identifier, and the user's avatar identifier.

When a Base_Avatar_Identifier is specified/included in the SDP message transmitted from a transmitting UE to a receiving UE or a signaling server (e.g., the IMS AS in the IMS network, the WebRTC signaling server in the WebRTC network, etc.), the multipart, session, or media including the Base_Avatar_Identifier is the first data and is indicated/identified as a part, session, or media for transmitting the base avatar.

Since the first data, i.e., the base avatar, is identified to indicate that it should be transmitted before the avatar call is established, the receiving UE or the signaling server confirms whether there is any already received base avatar having a matching identifier, and, when the base avatar has not been stored, the transmission of the corresponding part, session, or media is initiated.

Furthermore, since the first data, i.e., the base avatar, is identified to represent that the transmission should be completed before the avatar call is established, other parts, sessions, or media are identified as the second data and the transmission is not initiated until the first data transmission is completed.

When the base avatar has been stored, the base avatar is not received, and the second-step data transmission is initiated. Accordingly, the transmission of the part, session, or media including the first data may not be performed.

[2] A method for distinguishing data as a manifest file describing a structure of a base avatar is as follows:
The manifest file describes the properties and structure of the base avatar and the properties of the component files that constitute the base avatar. The properties of the base avatar may include the Base_Avatar_Identifier.

When a Base_Avatar_Manifest_URL is specified in a message transmitted from the transmitting UE to the receiving UE or signaling server, the manifest for the base avatar is received upon receipt of the manifest indicated by the Base_Avatar_Manifest_URL. The base avatar may be composed of one or more files, and each file may have one or more alternatives. The manifest file includes the properties of these files and their mutually alternative relationship properties. Accordingly, the receiving UE or the network MF may determine whether all or part of the files of the base avatar designated as used in the avatar call are stored, and may update all or part of the base avatar components by receiving alternative files specified with alternative properties.

Table 1 is an example of the manifest file that represents the property information and components of the base avatar.

**[Table 1]**

| |
|---|
| ``` (Manifest Structure) Base_Avatar_Identifier: "string" Avatar_Service_Provider_Identifier: "string" Avatar_Service_Provider_API_URL: "string" Base_Avatar_Solutions: { Base_Avatar_Solution: { Base_Avatar_Solution_Provider: "string" Base_Avatar_Solution_Identifier: "string" Base_Avatar_Solution_Profile: "string" } } User_Identifier: "string" Base_URL: "string" Components:{ Component:{ Component_ID: integer Component Type: "string" Component_Base_URL: "string" Alternatives:{ Alternative:{ Alternative_ID: integer Component_Alternative_URL: "string" Properties: Resolution:{ x: integer y: integer z: integer or float z_min: float z_max: float } Color-space: "string" Density: "string" Codec_Profile: "string" File_size: integer Creation_date: "date" Version:{ Major: integer Minor: integer } } } } ``` |

When specifying the base avatar to be used by the UE, the manifest file is transmitted, and the intermediary and recipient may read the manifest file to determine whether to receive or update all or some of the components.

The Base_Avatar_Identifier is the identifier for the base avatar. The Base_Avatar_Identifier may be unique within the user's UE, unique within the mobile communication network that mediates the avatar call, unique within the service of the avatar call service provider, or the unique identifier may be assigned between avatar call service providers.

Avatar_Service_Provider_Identifier: It provides the identification information for identifying the avatar call service provider.

Avatar_Service_Provider_API_URL: It provides an application programming interface (API) URL for accessing the avatar call service provider server.

Base_Avatar_Solutions represents the solutions applied to the base avatar. One or more solutions are specified as sub-properties.

The Base_Avatar_Solution represents the solution applied to the base avatar.

Base_Avatar_Solution_Provider: It provides the identification information for the provider of the solution applied to the base avatar.

The Base_Avatar_Solution_Identifier represents the solution identifier, and is an identifier that the solution provider has named for the solution and may be unique among solution providers.

The Base_Avatar_Solution_Profile represents a profile within the solution. Even for the same solution, it may be indicated when profiles are distinguished according to levels (e.g., high quality, low quality, etc.) of functional requirements.

The User_Identifier is an identifier used to identify the user of the base avatar. For the general-purpose base avatar, i.e., the avatar available to anyone, the User_Identifier property may not be provided or may be specified as "common," indicating that it does not belong to a specific user. For cases other than "common," the user may be identified by an identifier unique to the mobile communication network or within the avatar call service provider's service. A user may provide the base avatar without a User_Identifier when the user does not want/does not require the User_Identifier. Even after the User_Identifier is specified, the User_Identifier may be deleted by directly modifying the manifest file or by transmitting a revoke command to the avatar storage located in the network or the like.

The Base_URL is not specified by default, but when specified, may provide a base for an absolute path when data locations of components referenced in the manifest file are specified as relative paths. That is, by combining the Base_URL (e.g. https://10.10.10.10/Base/) with the relative path (e.g., Avatar/Components/Alternatives/file1-1-1.bin) of the component, https://10.10.10.10/Base/Avatar/Components/Alternatives/file1-1-1.bin may be represented as the absolute path of the component.

Components provide a list of components of the base avatar.

Component provides a property of components of the base avatar.

Component_ID is an ID of the component of the base avatar.

Component_Type represents a format of the component of the base avatar. The format may be a unique type registered with other international organizations, such as MIME types, or a unique format within the solution provider. Component_Type that may be considered in the solution for the avatar call includes GL transmission format (glTF), universal scene description (USD), and moving picture experts group (MPEG)-I scene description (MPEG-SD) that are a scene graph format, or texture, mesh, occupancy, attribute, skeleton, motion, haptic, video, audio, etc., that are 3D mesh resources.

Component_Base_URL represents the absolute path or the relative path of the component of the base avatar. For the absolute path, the Base_URL in the manifest file is ignored. For the relative path, the Base_URL and Component_Base_URL in the manifest file are combined and used as the base for the component path. When Component_Alternative_URL is the relative path, the Base_URL, Component_Base_URL, and Component_Alternative_URL in the manifest file are combined. When the Component_Alternative_URL is the absolute path, the Base_URL and Component_Base_URL in the manifest file are ignored.

Alternatives provide primary options and alternatives for a component. The component may be composed of one of the primary options and alternatives that may replace the primary options. The system (e.g., UE, remote UE, network MF, etc.) including an avatar animation unit that generates the animated avatar using the base avatar, and other avatar processing blocks may determine and receive alternatives for a component of the base avatar by considering reception latency required to receive alternatives for each component of the base avatar, processing resources, processing time, and energy efficiency required to appropriately process the received alternatives of components, the quality of the generated animated avatar, display specifications of the remote UE for representing the quality of the generated animated avatar, etc. The network intermediary or the remote UE that received and stored the base avatar from a previous call may analyze the manifest file to compare the base avatar stored in the avatar storage with the base avatar scheduled for use in the current call, determine a more appropriate alternative for the same component, and receive the corresponding alternative component.

Alternative represents the primary option or an alternative thereof.

Alternative_ID is the identifier of the alternative, and uses an integer system starting from 0. An Alternative_ID value of 0 represents the primary option.

Component_Alternative_URL represents an alternative receiving path. As described above, the Component_Alternative_URL may represent the absolute path or the relative path.

Properties provide alternative properties.

Resolution provides resolution information for the alternative.

x is provided for image/video/3-dimensional (3D) and represents a horizontal-axis scale.

y is provided for image/video/3D and represents a vertical-axis scale.

z is provided for 3D and represents a z-axis scale.

z_min and z_max are provided for depth and represent minimum and maximum depth values, respectively.

Color-space is provided for image/video and represents a reference color gamut.

Density is provided for image/video/3D and represents density information that is either relative (e.g., dense or sparse) or absolute (e.g., 300 dots per inch (dpi), 600 dpi).

Codec_Profile represents an alternative encoding profile or a profile.

File_size represents a size of alternative file or data.

Creation_date indicates a creation time of the alternative file or data. The network intermediary or the remote UE that received and stored the base avatar from the previous call may analyze the manifest file to compare the base avatar stored in the avatar storage with the base avatar scheduled for use in the current call, and update to a more recent alternative when different timestamps are represented for the same alternative.

Version provides version information.

Major and minor represents a version of the alternative. When a different version is indicated for the same alternative, a recipient may update to a newer alternative.

[3] One example of a method for distinguishing certain content of a syntax of an SDP message, which is transmitted by a UE for an avatar call, by specifying that the certain content is the first step, is as follows.

In the present disclosure, as an indicator for indicating new operations to be performed by a receiving side (e.g., a UE, a server, etc.) for an avatar call, Content-Ringing, Content-Required, and Content-Order may be used along with the above-described Conversation-Type, Base-Avatar-Identifier, and Base-Avatar-Manifest-URL.

The Content-Ringing is for indicating the timing of user notification, such as a ringtone start time, for the call request from the receiving UE. When the value of the Content-Ringing field indicated for one part is After-Completion, the user notification, which was initiated simultaneously with the transmission and reception of the corresponding part, is now initiated after the transmission of the corresponding part is completed.

The Content-Required is a property of media. For example, when the value of the Content-Required field indicated for one media is Skip-If-Exist, the corresponding media is not retransmitted when it has already been transmitted. The media may also include additional properties such as Base-Avatar-Identifier and Base-Avatar-Manifest-URL. The receiving UE or the server may determine whether it has already received the base avatar by using the Base-Avatar-Identifier, receive a manifest, determine whether components are to be added or updated, and then determine whether the manifest has been already received. When the manifest file has not been received, the corresponding media may not be skipped and the transmission may not be canceled midway.

The Content-Order is a method for indicating each part as step 1, step 2, etc., when providing multipart in the SDP. The SDP multipart format is a method of dividing a message body into multiple parts using boundaries. The SDP multipart format allows a single message to include multiple sessions. In this case, each session is distinguished into parts. However, there are no explicit conditions or methods defined in the conventional SDP standard for how the individual parts are associated with each other. In the SDP composed of the multipart, each part is interpreted independently, and there are no specific rules for which part should be converted to which other part.
- Therefore, as intended in the present disclosure, in order to configure the first step and the second step, first transmit the first step, and then transmit the second step after the completion of the first step transmission, additional operation indication information is required in addition to the multipart.
- In the present disclosure, to configure the first step and the second step as the multipart, the step information is assigned to each part. One embodiment is shown in Table 2 below. One embodiment of a method for assigning step information may be to provide Content-Order information for each part. Content-Order: The Content-Order may be represented such as <signed integer>, and may be assigned an integer value starting from 0 as a <signed integer> value, thereby indicating the execution order of the corresponding part. For integers greater than or equal to 0, the order is executed in ascending order of integer values equal to or greater than 0. When -1 is assigned, the corresponding part will not be automatically executed unless otherwise specified.
- To first transmit the first step, the present disclosure assigns a unique or overlapping number to each part in the Content-Order information, thereby assigning execution order information based on the size of the number. For example, when one part has a Content-Order value of 0 and the remaining parts have a Content-Order value of 1, only a part designated as 0 may be transmitted first, and the remaining parts with a value of 1 may be transmitted. However, as described above, parts with a value of -1 may be excluded from sequential execution.

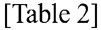

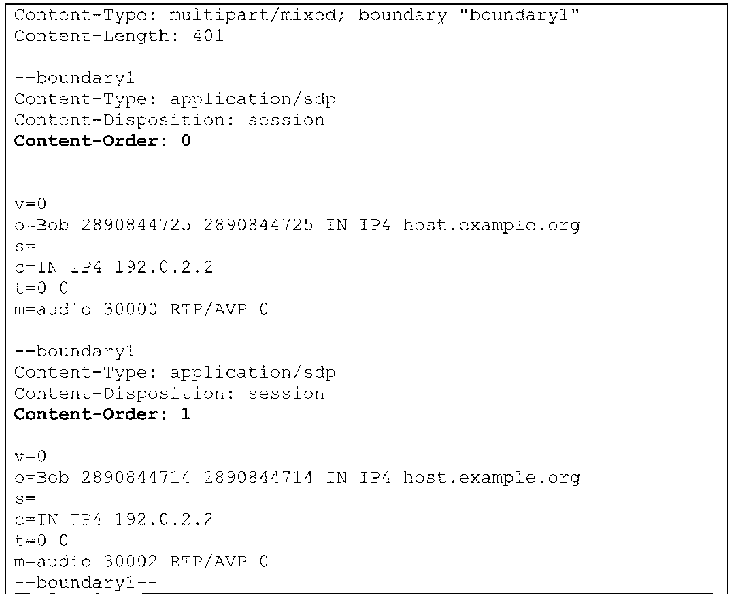

One embodiment of a method for configuring an SDP message composed of a multipart using the above indicators is as follows.

The multipart format may configure an SDP message into multiple parts as shown in Table 2. Alternatively, the multipart format may be configured as shown in Table 3.

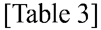

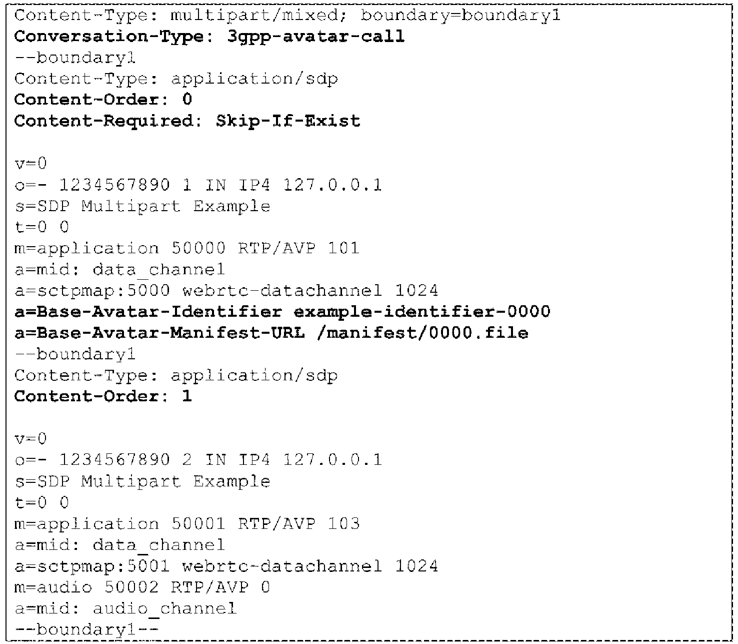

Since the existing standards do not explicitly specify conditions or methods for transmitting each part, the present disclosure may use Conversation-Type: 3gpp-avatar-call, as shown in Table 3, to represent that the corresponding call is an avatar call, specify Content-Order: 0 or 1 for each part to represent the first step and the second step, and specify Content-Required: Skip-If-Exist for a part corresponding to the first step to represent that the transmission of the media belonging to the part should not be interrupted and the media does not need to be received again. Furthermore, the Base-Avatar-Identifier and the Base-Avatar-Manifest-URL are provided as the properties of the media belonging to the part corresponding to the first step, thereby providing the information for determining and updating whether the base avatar is stored.

The following describes how to configure the first step and the second step using the above-described indicator in Multipart/Early session:

As one of the conventional technologies, the early session in the multipart is defined in RFC 3959. According to the RFC 3959, when the SDP content is divided into the multipart, there is provided a method for transmitting the corresponding part first using Content-Disposition: Early-session, and then transmitting the remaining parts. In the conventional technology, upon the initiation of the early session, the media (e.g., a ringback tone) specified by the receiving side is delivered to the transmitting side, and the receiving UE is notified of the incoming call (i.e., the ringtone is generated) at the same time that the playback of the specified media is started at the transmitting side. When the recipient presses a call button or picks up a handset, the early session is immediately terminated, and a 200 OK message is transmitted from the receiving UE to the transmitting UE.

When the Early-session is used to transmit the base avatar prior to the call initiation in terms of enabling the media transmission before the inbound call, the following problems arise. First, since the user's ringtone rings simultaneously with the transmission of the base avatar from the transmitting side to the receiving side, there is a problem in that the early session is immediately interrupted when the recipient presses the call button or picks up the handset. Furthermore, when the receiving side is made to wait until the transmission of the base avatar is completed even while the ringtone is ringing, there is no meaningful advantage in using the early session.

In the present disclosure, Content-Required:Skip-If-Exist, which is the above-described indicator as shown in Table 4, is used to indicate that the early session is a session for transmitting data that should be completely transmitted.

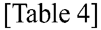

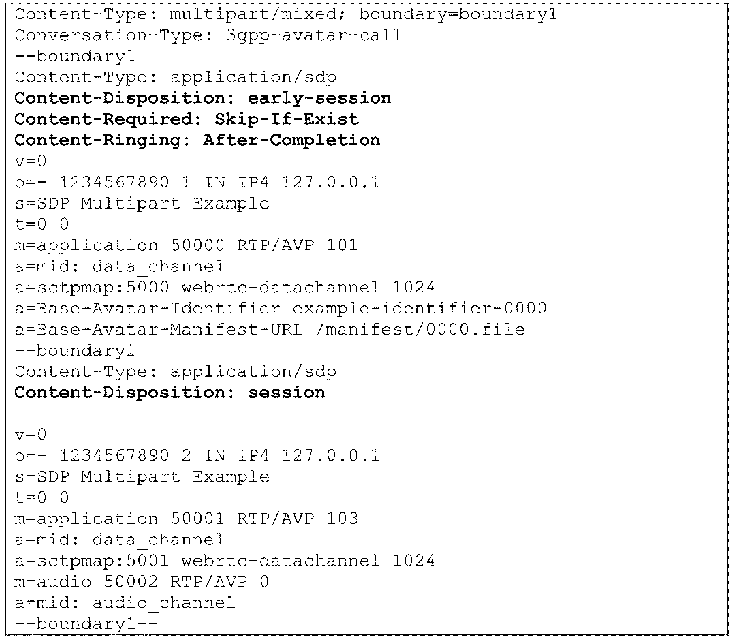

Accordingly, according to an embodiment of the present disclosure, the early session continues until the transmission is completed without interruption even when the user performs the inbound call, such as pressing the call button.

Furthermore, the Content-Ringing:After-Completion that is the above-described indicator is used to instruct the ringtone to be initiated after the transmission of the early session is completed. Therefore, the transmitting UE according to the present disclosure may initiate the ringtone after the transmission of the base avatar is completed in the early session established after a call request, and proceed to the transmission of the second-step data after the user's inbound call.

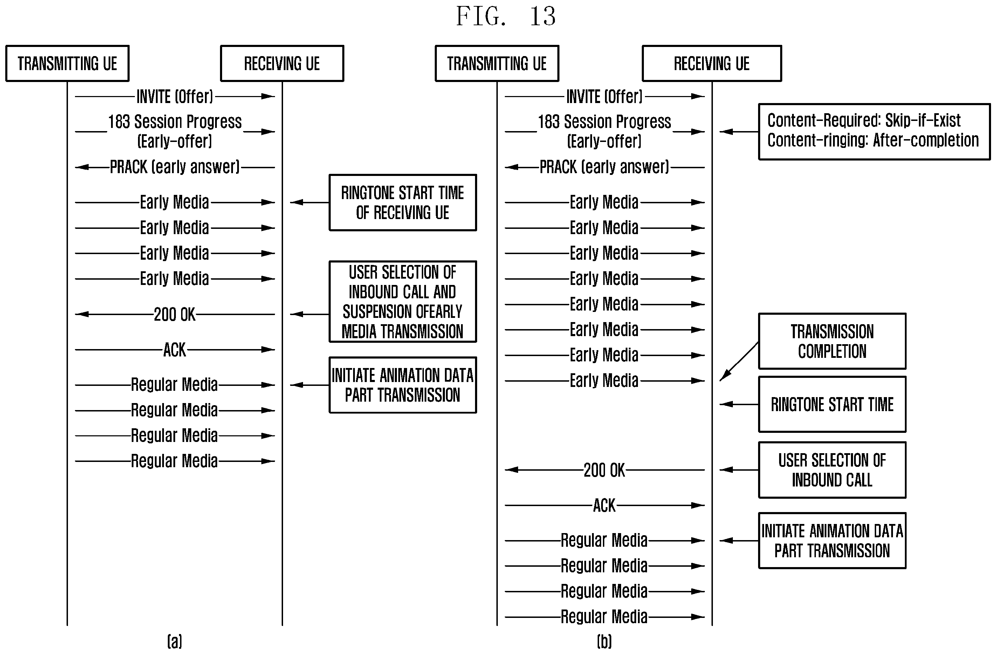

FIG. 13 is a diagram comparing an early-session according to various embodiments of the present disclosure with a conventional early session. A description of content overlapping with the above-described content will be omitted.

FIG. 13A illustrates the conventional early session. The ringtone is initiated at the receiving UE at the time when the early media is received. When the user determines to make the inbound call regardless of the complete transmission of the early media, i.e., presses the call button, the transmission of the early media is immediately interrupted. Therefore, the early session is not suitable for the transmission of the base avatar.

FIG. 13B illustrates that, when Content-Required:Skip-If-Exist and Content-Ringing are specified, the receiving UE does not initiate the ringtone until the transmission is completed and initiates the ringtone after the transmission is completed, so the transmission of the early media is insured. Therefore, the Content-Required:Skip-If-Exist and Content-Ringing are suitable for the transmission of the base avatar.

### [Method for Transmitting First Data and Second Data Among UE-Network-UE]

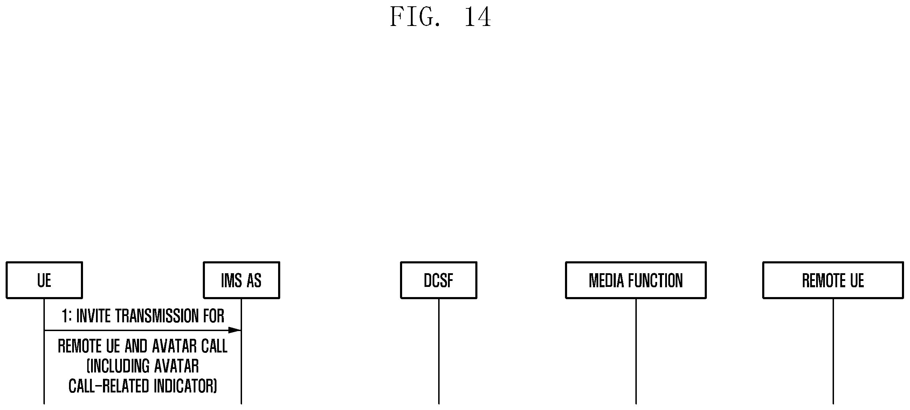

FIGS. 14 to 18E are flowcharts illustrating an example of a procedure for an avatar call according to various embodiments of the present disclosure. Various changes may be made to the method illustrated in the flowcharts of FIGS. 14 to 18E. For example, although illustrated as a series of steps, various steps in each drawing may overlap, occur in parallel, occur in different orders, or occur multiple times. In other examples, steps may be omitted or replaced with other steps.

In the process in which the above-described SDP message is performed as the avatar call using the early session between the UE and the remote UE via the IMS network, the UE first requests the avatar call with the remote UE via the IMS network, and the IMS network reuses the base avatar indicated for use in the avatar call when the base avatar exists in the network, and transmits and receives the base avatar prior to the call when the base avatar does not exist in the network. Next, the IMS network requests the avatar call from the remote UE, and transmits the base avatar prior to the call when the base avatar is not present in the remote UE. The transmission of the base avatar transmitted in the early session by the indicator is not canceled until the transmission is completed, and the ringtone of the remote UE is initiated after the transmission is completed.

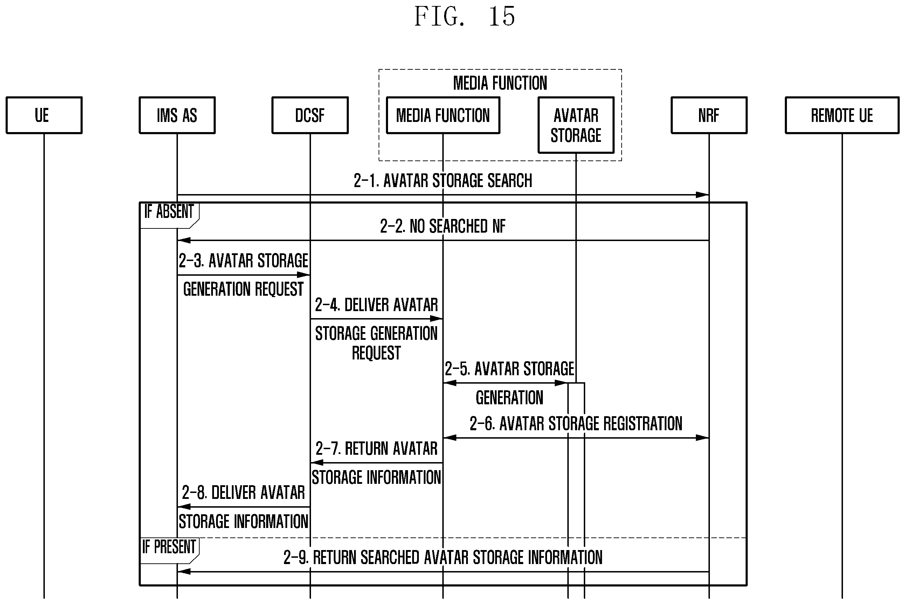

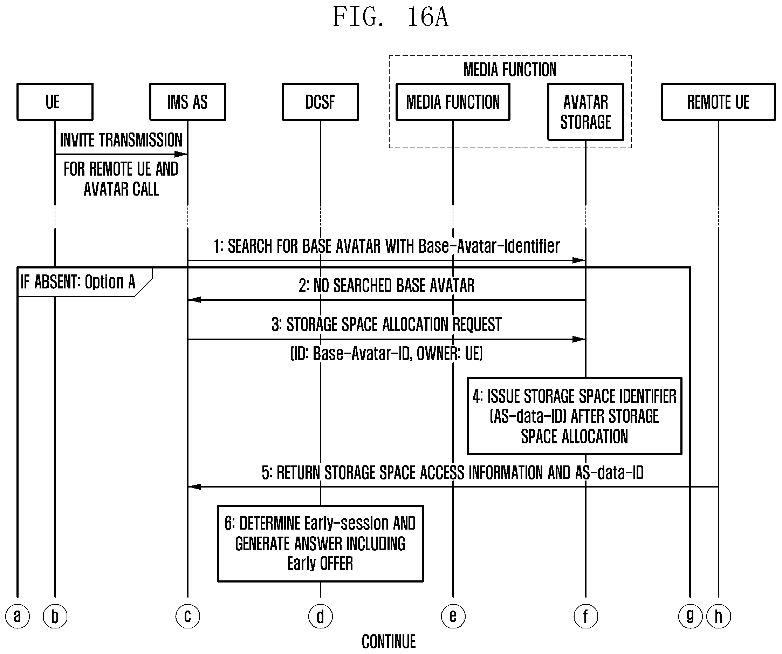

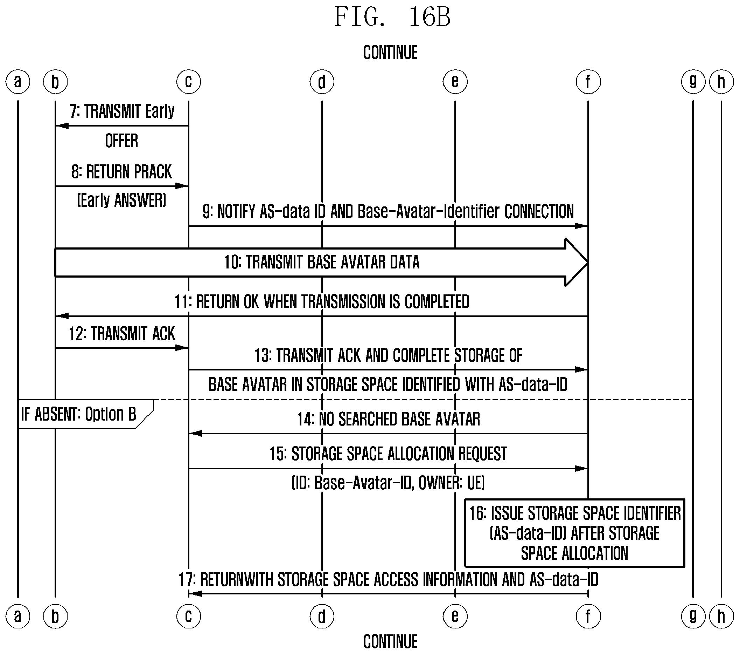

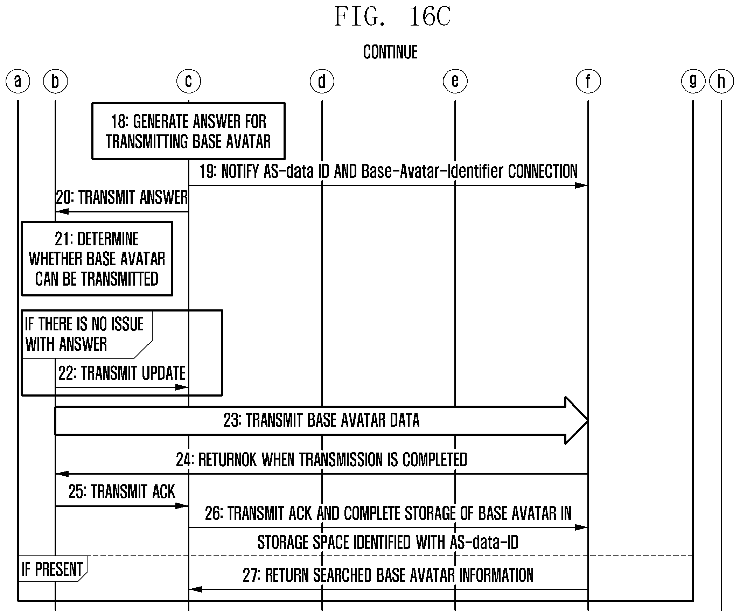

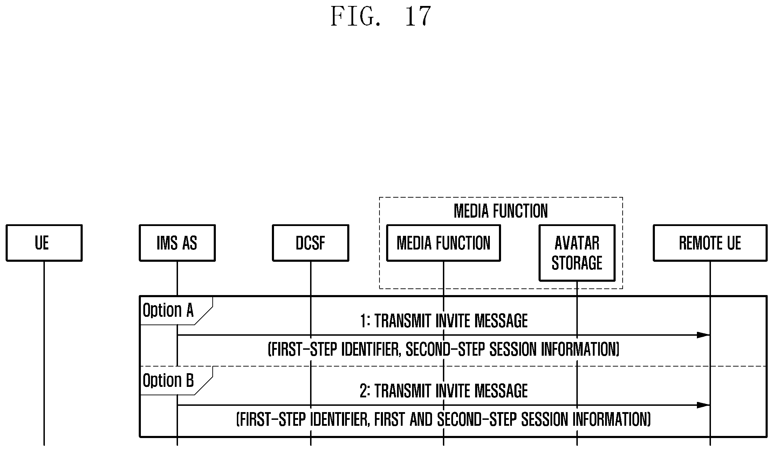

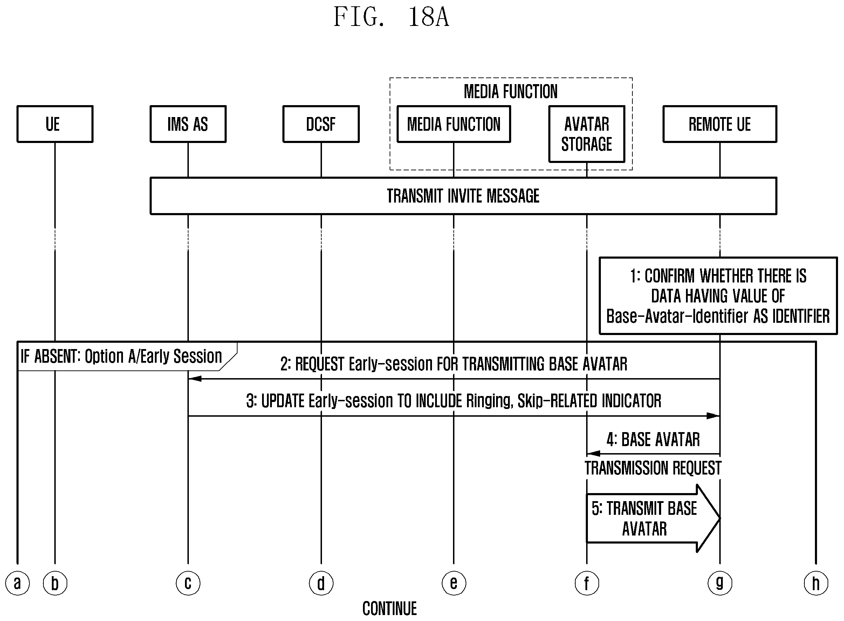

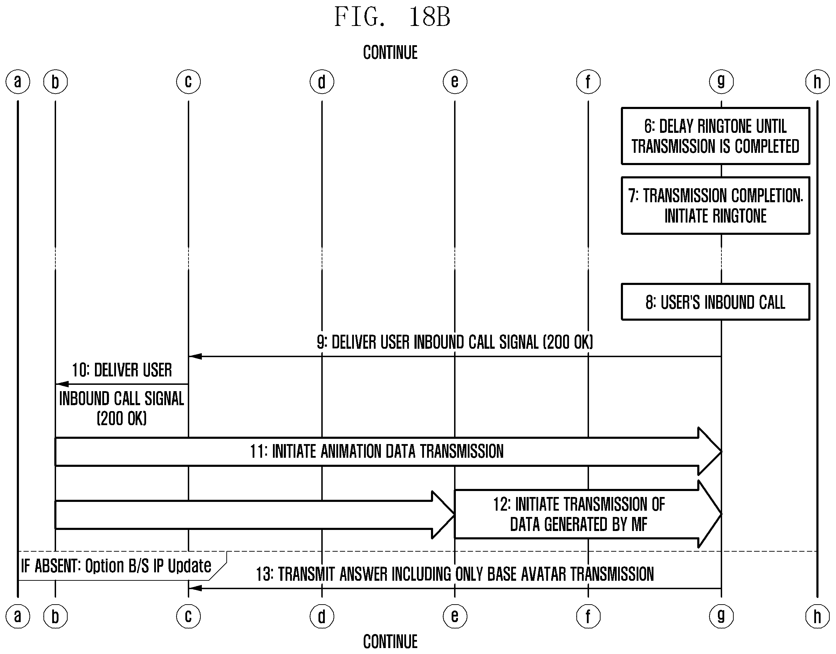

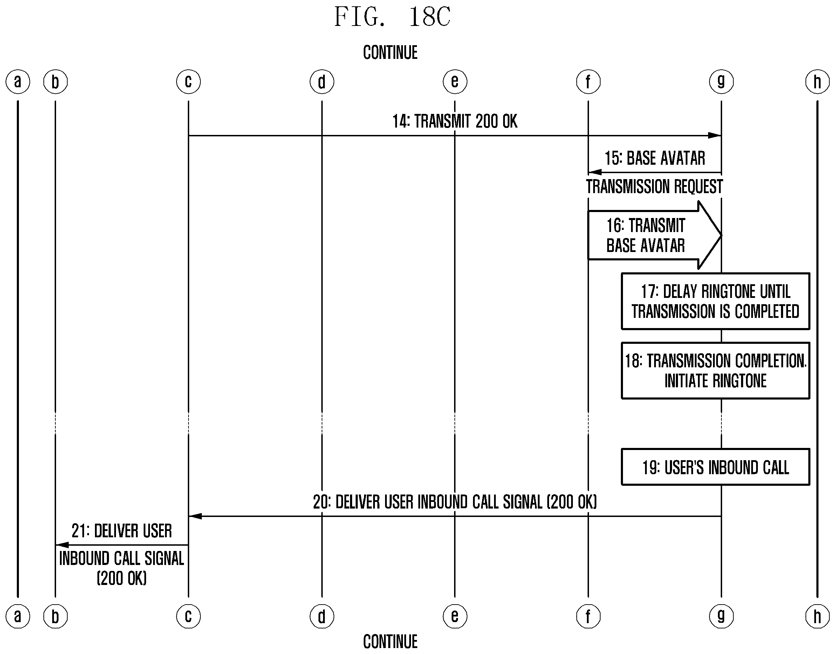

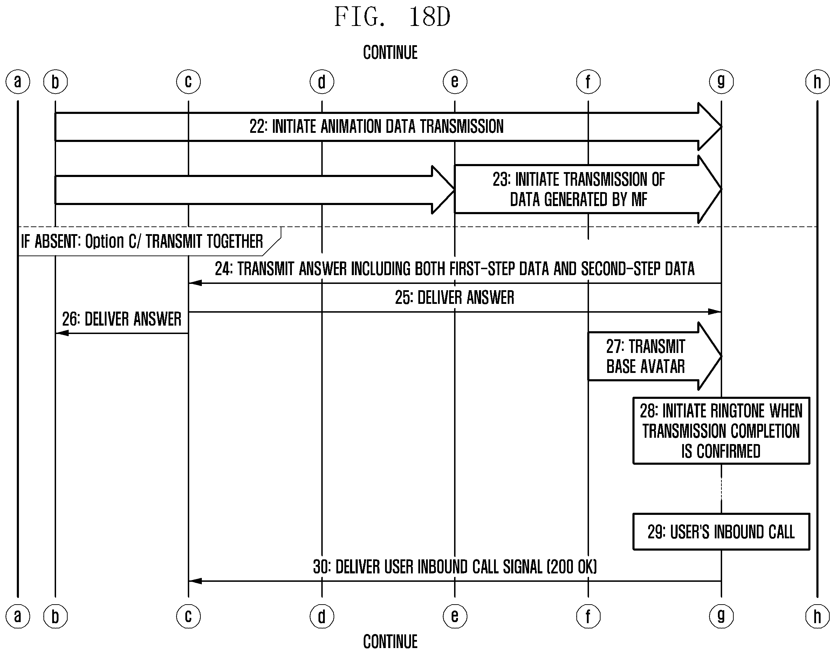

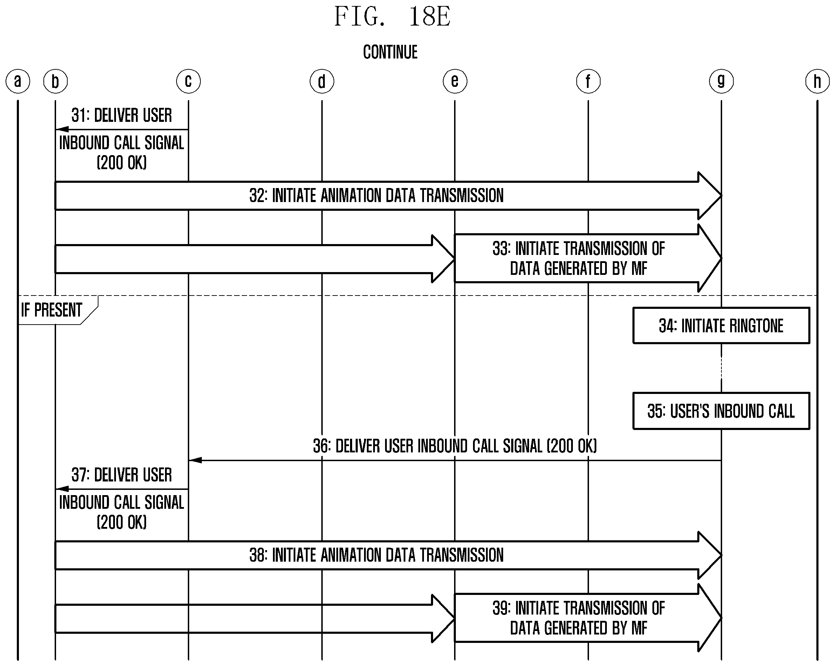

Referring to FIGS. 14 to 18E, the detailed process is as follows.
1. Referring to FIG. 14, the UE delivers a SIP INVITE message to the IMS AS for the avatar call with the remote UE. The corresponding message includes, in addition to the typical call request, the Conversation-Type that is type information indicating the avatar call, a Base-Avatar-Identifier that is the identifier for the base avatar associated with the first-step data, Content-Required:Skip-If-Exist that is a complete transmission flag, session information for transmitting the animation data, etc.
2. Referring to FIG. 15, the IMS AS searches for the avatar storage to confirm whether the base avatar information exists on the network.
   - 2-1. IMS AS->NRF: It searches for the avatar storage (AS). For example, it may be searched using the avatar storage feature of the MF or the network function (NF) registered as the avatar storage may be searched. In another embodiment, for the purpose of inquiring whether the Base Avatar is stored, the DCSF, rather than the AS, may be searched, and an inquiry may be made to the DCSF.
      - - When there is no search result:
         - - - 2-2. NRF->IMS AS: It returns that there is no searched NF.
         - - - 2-3. IMS AS->DCSF: It requests AS generation.
         - - - 2-4. DCSF->MF: It delivers AS generation request.
         - - - 2-5. MF?MF: It generates AS.
         - - - 2-6. MF<->NRF: It registers the generated AS with NRF.
         - - - 2-7. MF->DCSF: It returns information about the generated AS.
         - - - 2-8. DCSF->IMS AS: It delivers AS information.
      - - When there is search result:
         - - - 2-9. NRF->IMS AS: It returns the searched AS information.
3. Referring to FIGS. 16A to 16C, the IMS AS confirms whether the data identifiable by the Base-Avatar-Identifier is stored in the avatar storage. In another embodiment, when one or more avatar storage is available in the IMS network, the DCSF may act as an intermediary to query multiple avatar storages in response to a request from the IMS AS and provide a response.
   - 3-1. IMS->AS: It requests to confirm whether there is data having the Base-Avatar-Identifier value as an identifier.
      - - If absent: Option A/Early-session
         - - - 3-2. AS->IMS AS: It responds that there is no data.
         - - - 3-3. IMS AS->AS: It requests storage space allocation for storing the base avatar (ID: Base-Avatar-ID, Owner: UE).
         - - - 3-4. AS?AS: It allocates a storage space and issues an AS-data-ID that is a storage space identifier. The AS-data-ID is the identifier of the storage space allocated by the storage, and indicates a space allocated and managed by a storage for managing network storage for general-purpose use without being limited to the avatar call and the base avatar.
         - - - 3-5. AS->IMS AS: It returns the storage space access information and the AS-data-ID.
         - - - 3-6. IMS AS?IMS AS: The IMS identifies that the Conversation-Type corresponds to the avatar call, and since the IMS confirms that the base avatar does not exist in the avatar storage in the state in which it knows which base avatar is to be used based on the Base-Avatar-Identifier, the IMS generates the early session to request the transmission of the base avatar. The IMS AS generates an Early OFFER and configures a sender to be the UE and a recipient to be the AS.
         - - - 3-7. IMS AS->UE: It transmits the Early OFFER and then transmits ANSWER including only the data channel for transmitting the base avatar to request session establishment. The Early OFFER may also request the transmission of the Early ANSWER, including the data channel for transmitting the base avatar.
         - - - 3-8. UE->IMS AS: It responds to the transmission request by returning the Early ANSWER included in a provisional response acknowledgement (ACK) (PRACK). The Early ANSWER only includes only the early-session for transmitting the base avatar. In response to the Early OFFER, the Early ANSWER including the data channel for transmitting the base avatar may be transmitted via the PRACK.
         - - - 3-9. IMS AS->AS: It notifies that the AS-data-ID which is the storage space identifier and the data identified by the Base-Avatar-Identifier are linked. The AS can respond to the inquiry regarding whether the storage using the Base-Avatar-Identifier is performed in the future.
         - - - 3-10. UE->AS: It transmits the base avatar data.
         - - - 3-11. AS->UE: When the transmission is completed, it returns OK.
         - - - 3-12. UE->IMS AS: It transmits ACK.
         - - - 3-13. IMS AS->AS: The ACK is delivered. The AS considers that the storage of the base avatar in the storage space identified by the AS-data-ID is completed.
      - - If absent: Option B/SIP UPDATE
         - - - 3-14. AS->IMS AS: None. It notifies that there is no searched base avatar.
         - - - 3-15. IMS AS->AS: It requests storage space allocation for storing the base avatar (ID: Base-Avatar-ID, Owner: UE).
         - - - 3-16. AS?AS: It allocates a storage space and issues an AS-data-ID that is a storage space identifier.
         - - - 3-17. AS->IMS AS: It returns the storage access information and the AS-data-ID.
         - - - 3-18. IMS AS?IMS AS: Since the IMS AS identifies that the Conversation-Type corresponds to the avatar call, and confirms that the base avatar does not exist in the avatar storage in the state in which it knows which base avatar is to be used based on the Base-Avatar-Identifier, the IMS AS determines to request the transmission of the base avatar to the UE. The IMS AS generates an ANSWER requesting reception of the Base Avatar and is configured such that a sender is the UE and a recipient is the AS.
         - - - 3-19. IMS AS->AS: It notifies that the AS-data-ID which is the storage space identifier and the data identified by the Base-Avatar-Identifier are linked. The AS can respond to the inquiry regarding whether the storage using the Base-Avatar-Identifier is performed in the future.
         - - - 3-20. IMS AS->UE: It requests the session establishment by transmitting the ANSWER including only the data channel for transmitting the base avatar. The ANSWER may include the data channel for transmitting the base avatar. The receiving side is the AS.
         - - - 3-21. UE?UE: It determines whether there is abnormality in the IMS request.
            - - - - If abnormal
            - - - - - 3-22. UE->IMS AS: Some properties transmit a revised SIP UPDATE message. Generally, the ANSWER is not required.
            - - - - If normal
               - - - - - 3-23. UE->AS: It transmits the base avatar data.
               - - - - - 3-24. AS->UE: When the transmission is completed, it returns OK.
               - - - - - 3-25. UE->IMS AS: It transmits ACK.
               - - - - - 3-26. IMS AS->AS: The ACK is delivered. The AS considers that the storage of the base avatar in the storage space identified by the AS-data-ID is completed.
      - - If present:
         - - - 3-27. AS->IMS AS: It returns that there is the base avatar requested for confirmation. The response content includes information (e.g., true/false) indicating that it is being stored/managed, information (e.g., at least one of Base-Avatar-Identifier, base avatar data, data version information, and data storage time points) about the corresponding base avatar.
4. Referring to FIG. 17, the IMS AS creates/acquires/generates the avatar call request to be delivered to the remote UE. The SIP INVITE message created/acquired/generated by the IMS AS includes the Conversation-Type, which is the type information indicating that it is the avatar call requested from the UE, the Base-Avatar-Identifier, which is the identifier of the base avatar related to the first-step data, the Content-Required:Skip-If-Exist, which is the complete transmission flag, and/or the session information for transmitting the animation data, etc.
   - 1. Option A/Early session
      - - IMS AS->Remote UE: It transmits the Base-Avatar-Identifier, which is the first-step data, and the second-step data transmission information (session information). This is to allow the receiving side according to the present disclosure to determine whether the first-step data is required and to request and receive the early session when necessary. The INVITE message includes Conversation-Type: 3gpp-avatar-call, Base-Avatar-Identifier, Content-Required: Skip-If-Exist, and/or Content-Ringing: After-Completion to indicate an operation regarding the first-step data.
   - 2. Option B/SIP UPDATE
      - - IMS AS->Remote UE: It transmits the data channel information for receiving the Base-Avatar-Identifier, which is the first-step data, and the base avatar, and the second-step data transmission information (session information). This is to allow the receiving side according to the present disclosure to determine whether the first-step data is required and not to receive the corresponding session when not necessary. The INVITE message includes Conversation-Type: 3gpp-avatar-call, Base-Avatar-Identifier, Content-Required: Skip-If-Exist, and Content-Ringing: After-Completion to indicate an operation regarding the first-step data.
5. Referring to FIGS. 18A to 18E, the remote UE searches for the avatar storage within the remote UE to determine whether it has received and stored the base avatar from a previous avatar call.
   - 5-1. Remote UE--Remote UE: It confirms whether there is data having the value of Base-Avatar-Identifier as an identifier.
      - - If absent Option A/Early session
         - - - 5-2. Remote UE->IMS AS: The remote UE requests an early session to the IMS to transmit the base avatar.
         - - - 5-3. IMS AS->Remote UE: The IMS AS performs UPDATE to insert the Ringing, Content-Required:Skip-If-Exist, which is skip-related tag, and Content-Ringing: After-Completion.
         - - - 5-4. Remote UE->AS: It requests the AS to transmit the base avatar.
         - - - 5-5. AS->Remote UE: It transmits the base avatar.
         - - - 5-6. Remote UE--Remote UE: According to Content-Ringing: After-Completion, the remote UE does not ring until the transmission is completed and waits for the ringtone until the transmission is completed.
         - - - 5-7. Remote UE--Remote UE: Upon completion of the transmission, the ringtone is initiated.
         - - - 5-8. Remote UE--Remote UE: User's inbound call
         - - - 5-9. Remote UE->IMS AS: User's inbound call signal deliver (e.g., 200 OK)
         - - - 5-10. IMS AS->UE: User's inbound call signal deliver (e.g., 200 OK)
         - - - 5-11. UE->Remote UE: The animation data transmission is initiated.
         - - - 5-12. UE->(MF)->Remote UE: The transmission of data generated by MF is initiated
      - - If absent, Option B/SIP UPDATE
         - - - 5-13. Remote UE->IMS AS: The remote UE transmits ANSWER including only the base avatar transmission to the IMS AS. The second-step data transmission is not initiated until the base avatar transmission is completed.
         - - - 5-14. IMS AS->Remote UE: The response message (e.g., 200 OK) is transmitted.
         - - - 5-15. Remote UE->AS: It requests the AS to transmit the base avatar.
         - - - 5-16. AS->Remote UE: It transmits the base avatar.
         - - - 5-17. Remote UE--Remote UE: According to Content-Ringing: After-Completion, the remote UE does not ring until the transmission is completed and initiates the ringtone after the completion.
         - - - 5-18. Remote UE--Remote UE: Upon completion of the transmission, the ringtone is initiated.
         - - - 5-19. Remote UE--Remote UE: User's inbound call
         - - - 5-20. Remote UE->IMS AS: User's inbound call signal deliver (e.g., 200 OK)
         - - - 5-21. IMS AS->UE: User's inbound call signal deliver (e.g., 200 OK)
         - - - 5-22. UE->Remote UE: Animation data transmission is initiated.
         - - - 5-23. UE->(MF)->Remote UE: The transmission of data generated by MF is initiated.
      - - If absent, Option B2 / transmitted together
         - - - The remote UE transmits the first data and the second data simultaneously. According to Content-Ringing: After-Completion, the ringtone does not ring until the reception of the first data is completed. After the ringtone is initiated, the first data and the second data may be combined and played simultaneously with the user's inbound call.
         - - - 5-24. Remote UE ->IMS AS: It transmits ANSWER including both the first and second data.
         - - - 5-25. IMS AS->AS: ANSWER deliver
         - - - 5-26. IMS AS->UE: ANSWER deliver
         - - - 5-27. AS->Remote UE: It transmits the base avatar
         - - - 5-28. Remote UE--Remote UE: The ringtone is initiated when it is confirmed that the transmission is completed.
         - - - 5-29. Remote UE--Remote UE: User's inbound call
         - - - 5-30. Remote UE->IMS AS: User's inbound call signal deliver (e.g. 200 OK)
         - - - 5-31. IMS AS->UE: User's inbound call signal deliver (e.g., 200 OK)
         - - - 5-32. UE->Remote UE: Animation data transmission is imitated
         - - - 5-33. UE->(MF)->Remote UE: The transmission of data generated by MF is initiated.
      - - If present
         - - - 5-34. Remote UE--Remote UE: Ringtone is initiated.
         - - - 5-35. Remote UE--Remote UE: user's inbound call
         - - - 5-36. Remote UE->IMS AS: user's inbound call signal deliver (e.g., 200 OK)
         - - - 5-37. IMS AS->UE: user's inbound call signal deliver (e.g., 200 OK)
         - - - 5-38. UE->Remote UE: Animation data transmission is initiated.
         - - - 5-39. UE->(MF)->Remote UE: The transmission of data generated by MF is initiated.

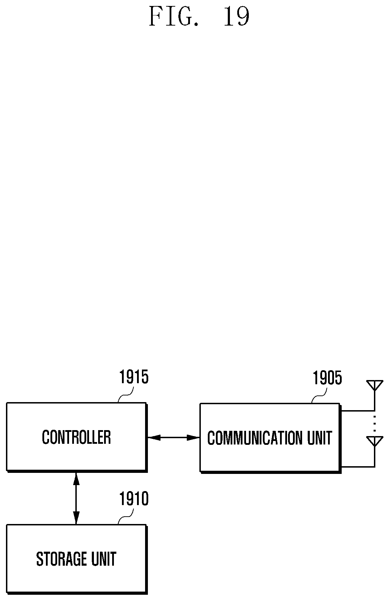

FIG. 19 illustrates an example of a functional structure of a terminal according to embodiments of the present disclosure. The configuration illustrated in FIG. 19 may be understood as the configuration of the sender terminal and/or recipient terminal described above. A term '~unit,' '~or/er,' or the like, used below means a unit of processing at least one function or operation and may be implemented by hardware or software or a combination of hardware and software.

Referring to FIG. 19, the terminal includes a communication unit 1905, a storage unit 1910, and a controller 1915.

The communication unit 1905 performs functions for transmitting and receiving signals via a wireless channel. For example, the communication unit 1905 performs a conversion function between a baseband signal and a bit sting according to physical layer specifications of a system. For example, when transmitting data, the communication unit 1905 encodes and modulates the transmitted bit string to generate complex symbols. In addition, when receiving data, the communication unit 1905 demodulates and decodes the baseband signal to restore the received bit string. Furthermore, the communication unit 1905 up-converts the baseband signal into an RF band signal and transmits the RF band signal via an antenna, and down-converts the RF band signal received via the antenna into the baseband signal. For example, the communication unit 1905 may include a transmission filter, a reception filter, amplifier, a mixer, an oscillator, a DAC, an ADC, and the like.

Furthermore, the communication unit 1905 may include multiple transmit and receive paths. Furthermore, the communication unit 1905 may include at least one antenna array composed of multiple antenna elements. In terms of hardware, the communication unit 1905 may be composed of a digital circuit and an analog circuit (e.g., a radio frequency integrated circuit (RFIC)). Here, the digital and analog circuits may be implemented in one package. In addition, the communication unit 1905 may include multiple RF chains. Furthermore, the communication unit 1905 may perform beamforming.

The communication unit 1905 transmits and receives signals as described above. Accordingly, all or part of the communication unit 1905 may be referred to as a 'transmitter,' a 'receiver,' or a 'transceiver'. Additionally, in the following description, the transmission and reception performed via the wireless channel are used as a meaning including processing performed by the communication unit 205 as described above.

The storage unit 1910 stores data such as basic programs, application programs, and configuration information for the operation of the terminal. The storage unit 1910 may include a volatile memory, a non-volatile memory, or a combination of the volatile and non-volatile memories. Further, the storage unit 210 provides the stored data according to the request of the controller 1915.

The controller 1915 controls the overall operations of the terminal. For example, the controller 1915 transmits and receives signals through the communication unit 1905. In addition, the controller 1915 writes and reads data in and from the storage unit 1910. The controller 1915 may perform protocol stack functions required by communication standards. To this end, the controller 1915 may include at least one processor or microprocessor, or may be a part of a processor. Furthermore, a part of the communication unit 1905 and the controller 1915 may be referred to as a communication processor (CP). According to various embodiments, the controller 1915 may control synchronization to be performed using a wireless communication network. For example, the controller 1915 may control the terminal to perform operations according to various embodiments described below.

According to various embodiments of the present disclosure, the terminal may be composed of a mobile equipment (ME) and a universal mobile telecommunications service (UMTS) subscriber identity module (USIM). The ME may include a mobile terminal (MT) and terminal equipment (TE). The MT may be a part where a wireless access protocol operates, and the TE may be a part where a control function operates. For example, in the case of a wireless communication terminal (e.g., a mobile phone), the MT and the TE may be integrated, while in the case of a laptop, the MT and the TE may be separate. The present disclosure may express the ME and the USIM as distinct entities depending on the operation of each component. However, the present disclosure is not limited thereto, and various embodiments of the present disclosure may be described by representing a terminal (e.g., a UE) including the ME and the USIM, or by representing the ME as the terminal.

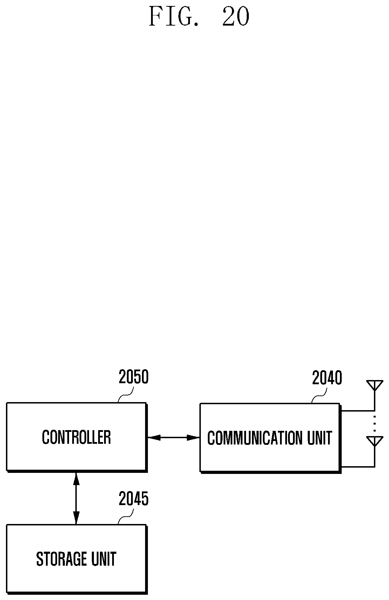

FIG. 20 illustrates an example of a functional structure of a core network entity according to embodiments of the present disclosure. FIG. 20 illustrates the configuration of the core network entity in the wireless communication system according to various embodiments of the present disclosure. The configuration illustrated in FIG. 20 may be understood as a configuration of a device having the function of at least one of the network entities including the network function (NF) in the description of various embodiments of the present disclosure described above. A term '~unit,' '~or/er,' or the like, used below means a unit of processing at least one function or operation and may be implemented by hardware or software or a combination of hardware and software.

Referring to FIG. 20, the core network entity includes a communication unit 2040, a storage unit 2045, and a controller 2050.

The communication unit 2040 provides an interface for communicating with other devices within the network. That is, the communication unit 2040 converts a bit string transmitted from the core network entity to another device into a physical signal, and converts the physical signal received from another device into the bit string. In other words, the communication unit 2040 may transmit and receive signals. Accordingly, the communication unit 2040 may be referred to as a modem, a transmitter, a receiver, or a transceiver. In this case, the communication unit 2040 enables the core network entity to communicate with other devices or systems via a backhaul connection (e.g., wired backhaul or wireless backhaul) or via the network.

The storage unit 2045 stores data such as basic programs, application programs, and configuration information for the operation of the core network entity. The storage unit 2045 may include a volatile memory, a non-volatile memory, or a combination of the volatile and non-volatile memories. Further, the storage unit 2045 provides the stored data according to the request of the controller 2050.

The controller 2050 controls the overall operations of the core network entity. For example, the controller 2050 transmits and receives signals via the communication unit 2040. In addition, the controller 2050 writes and reads data in and from the storage unit 2045. To this end, the controller 2050 may include at least one processor. According to various embodiments of the present disclosure, the controller 2050 may control the synchronization to be performed using the wireless communication network. For example, the controller 2050 may control the core network entity to perform the operations according to various embodiments described below.

The methods according to the embodiments described in the claims or specifications of the present disclosure may be implemented in the form of hardware, software, or a combination of hardware and software.

When implemented in software, a computer-readable storage medium storing one or more programs (software modules) may be provided. One or more programs stored in the computer-readable storage medium are configured to be executable by one or more processors in an electronic device. One or more programs include instructions for causing an electronic device to execute methods according to embodiments described in a claim or specification of the present disclosure.

Such programs (software modules, software) may be stored in a random access memory, a non-volatile memory including flash memory, a read only memory (ROM), an electrically erasable programmable read only memory (EEPROM), a magnetic disc storage device, a compact disc-ROM (CD-ROM), digital versatile Discs (DVDs), any other form of optical storage device, and a magnetic cassette. Alternatively, it may be stored in a memory composed of a combination of some or all thereof. In addition, each memory component may be included in plural.

In addition, the program may be stored in an attachable storage device that may be accessed via a communication network such as the Internet, the Intranet, a local area network (LAN), wide LAN (WLAN), or a storage area network (SAN), or a combination thereof. Such a storage device may be connected to a device implementing an embodiment of the present disclosure through an external port. In addition, a separate storage device on the communication network may be connected to the device implementing the embodiment of the present disclosure.

In the specific embodiments of the present disclosure described above, the components included in the embodiment are expressed in the singular or plural according to the specific embodiments presented. However, the singular or plural expression is appropriately selected for the context presented for convenience of description, and the present disclosure is not limited to the singular or plural components, and even if the component is expressed in plural, the component is configured in singular or even if the component is expressed in singular, the components may be configured in plural.

Meanwhile, the embodiments of the present disclosure disclosed in this specification and drawings are merely specific examples presented to easily describe the technical contents of the present disclosure and to help understanding of the present disclosure, and are not intended to limit the scope of the present disclosure. That is, it is obvious to a person having ordinary skill in the art to which the present disclosure pertains that other modifications based on the technical idea of the present disclosure are possible. In addition, each embodiment may be combined with each other and operated as needed.

Meanwhile, the order of description in the drawings describing the method of the present disclosure does not necessarily correspond to the order of execution, and the order of precedence may be changed or executed in parallel.

Alternatively, the drawings describing the method of the present disclosure may omit some components and include only some components, without departing from the essence of the present disclosure.

In addition, the method of the present disclosure may be executed by combining some or all of the contents included in each embodiment, without departing from the essence of the present disclosure.

Various embodiments of the present disclosure have been described above. The foregoing description of the present disclosure is for illustrative purposes, and the embodiments of the present disclosure are not limited to the disclosed embodiments. It will be understood by those of ordinary skill in the art to which the present disclosure pertains that various modifications can be made in other specific forms without departing from the teachings or essential features of the present disclosure. It should be interpreted that the scope of the present disclosure is defined by the following claims rather than the detailed description and all modifications or alterations deduced from the meaning, the scope, and equivalences of the claims are included in the scope of the present disclosure.

## Claims

1. A method performed by a device included in a core network in a communication system, comprising:
receiving, from a first terminal, a first message for an avatar call between the first terminal and a second terminal, the first message including a first avatar media list available on the first terminal in relation to the avatar call;
updating the first message to further include a second avatar media list being available to be provided by the core network in relation to the avatar call;
transmitting the updated first message to the second terminal;
receiving, from the second terminal, a second message including one or more avatar media, each avatar media included in the first avatar media list or the second avatar media list; and
configuring the avatar call based on the one or more avatar media.

2. The method of claim 1, further comprising:
confirming, based on the first message, that a call requested from the first terminal is the avatar call, wherein the confirmation that the call is the avatar call is:
based on call type information indicating that the call requested from the first terminal is the avatar call, the call type information being included in the first message, or
based on indication information for a base avatar associated with the avatar call, the indication information being included in the first message.

3. The method of claim 1, wherein the first message further includes a list of solutions associated with the base avatar associated with the avatar call or associated with the first avatar media list, and a type of each avatar media included in the first avatar media.

4. The method of claim 1, wherein one or more media function (MF) instances are allocated for the avatar call on the core network, each MF instance corresponds to one or more of avatar storage (AS), animation data generation (ADG), avatar animation (AA), base avatar generation (BAG), scene management (SM), renderer, or avatar processing block management (APBM), and the second avatar media list is associated with the one or more MF instances.

5. The method of claim 1, wherein the avatar call is based on first data including a base avatar associated with the avatar call and second data including an avatar motion command associated with the avatar call,
the first data is indicated based on indication information for the base avatar associated with the avatar call included in the updated first message or content order information associated with the avatar call included in the updated first message, and
the updated first message further includes information indicating to skip reception of corresponding data when the corresponding data is stored

6. A device included in a core network in a communication system, comprising:
a transceiver; and
a processor connected to the transceiver, wherein the processor is configured to:
receive, from a first terminal, a first message for an avatar call between the first terminal and a second terminal, the first message including a first avatar media list available on the first terminal in relation to the avatar call;
update the first message to further include a second avatar media list being available to be provided by the core network in relation to the avatar call;
transmit the updated first message to the second terminal;
receive, from the second terminal, the second message including one or more avatar media, each avatar media included in the first avatar media list or the second avatar media list; and
configure the avatar call based on the one or more avatar media.

7. The device of claim 6, wherein it is confirmed, based on the first message, that a call requested from the first terminal is the avatar call, and the confirmation that the call is the avatar call is:
based on call type information indicating that the call requested from the first terminal is the avatar call, the call type information being included in the first message, or
based on indication information for a base avatar associated with the avatar call, the indication information being included in the first message.

8. The device of claim 6, wherein the first message further includes a list of solutions associated with the base avatar associated with the avatar call or associated with the first avatar media list, and a type of each avatar media included in the first avatar media.

9. The device of claim 6, wherein one or more media function (MF) instances are allocated for the avatar call on the core network, each MF instance corresponds to one or more of avatar storage (AS), animation data generation (ADG), avatar animation (AA), base avatar generation (BAG), scene management (SM), renderer, or avatar processing block management (APBM), and the second avatar media list is associated with the one or more MF instances.

10. The device of claim 6, wherein the avatar call is based on first data including a base avatar associated with the avatar call and second data including an avatar motion command associated with the avatar call,
the first data is indicated based on indication information for the base avatar associated with the avatar call included in the updated first message or content order information associated with the avatar call included in the updated first message, and
the updated first message further includes information indicating to skip reception of corresponding data when the corresponding data is stored

11. A method performed by a first terminal in a communication system, comprising:
transmitting a first message for an avatar call between a first terminal and a second terminal to a second terminal via a core network, the first message including a first avatar media list available on the first terminal in relation to the avatar call;
receiving, from the core network, a configuration for the avatar call; and
performing the avatar call,
wherein the avatar call is based on one or more avatar media, and each avatar media is included in the first avatar media list or a second avatar media list being available to be provided by the core network.

12. The method of claim 11, wherein it is indicated, based on the first message, that a call requested from the first terminal is the avatar call, and the indication that the call is the avatar call is:
based on call type information indicating that the call requested from the first terminal is the avatar call, the call type information being included in the first message, or
based on indication information for a base avatar associated with the avatar call, the indication information being included in the first message.

13. The method of claim 11, wherein the first message is updated by the core network to further include the second avatar media list and delivered to the second terminal, and
the first message further includes a list of solutions associated with the base avatar associated with the avatar call or associated with the first avatar media list, and a type of each avatar media included in the first avatar media.

14. A first terminal in a communication system, comprising:
a transceiver; and
a processor connected to the transceiver, wherein the processor is configured to:
transmit a first message for an avatar call between a first terminal and a second terminal to a second terminal via a core network, the first message including a first avatar media list available on the first terminal in relation to the avatar call;
receive, from the core network, a configuration for the avatar call; and
perform the avatar call, and
the avatar call is based on one or more avatar media, and each avatar media is included in the first avatar media list or a second avatar media list being available to be provided by the core network.

15. The first terminal of claim 14, wherein it is indicated, based on the first message, that a call requested from the first terminal is the avatar call, and the indication that the call is the avatar call is:
based on call type information indicating that the call requested from the first terminal is the avatar call, the call type information being included in the first message, or
based on indication information for a base avatar associated with the avatar call, the indication information being included in the first message.
